# EUROPEAN PATENT APPLICATION

(11) **EP 4 668 885 A1**
(43) Date of publication of application: **24.12.2025**
(21) Application number: 24755839.8
(22) Date of filing: 08.01.2024
(51) Int. Cl.: H04W 52/02

(54) **SIGNAL PROCESSING METHOD, AND DEVICE AND READABLE STORAGE MEDIUM**

(30) Priority: 13.02.2023 CN 202310106689
(71) Applicant: Datang Mobile Communications Equipment Co., Ltd., Beijing 100085 (CN)
(72) Inventor: LI, Yaomin, Beijing 100085 (CN); YANG, Meiying, Beijing 100085 (CN); WANG, Jiaqing, Beijing 100085 (CN)
(74) Representative: Studio Torta S.p.A.
(86) International application number: PCT/CN2024/071054
(87) International publication number: WO 2024/169463

(57) **Abstract**

The present disclosure provides a signal processing method and device and a readable storage medium, and relates to the technical field of communications, which are used for ensuring reception of a low-power receiving signal and performance of receiving a normal signal after a device is awakened again. The method includes: in an extremely low power consumption state, receiving a first signal and/or a second signal sent by a network device; obtaining at least one of first synchronization information and first wake-up information according to the first signal and/or the second signal; receiving a wake-up signal according to at least one of the first synchronization information and the first wake-up information.

## Description

### CROSS-REFERENCE TO RELATED APPLICATION

The present application is filed based on and claims the priority of Chinese Application No. 202310106689.5 filed on February 13, 2023, entitled "signal processing method and device and readable storage medium", the disclosure of which are incorporated in their entireties by reference herein.

### TECHNICAL FIELD

The present disclosure relates to the field of communication technologies, and in particular, to a signal processing method and device and readable storage medium.

### BACKGROUND

In the related art, concepts of low power wake-up signal (LP-WUS) and low power wake up receiver (LP-WUR) are proposed, so as to further reduce energy consumption of terminals. When there is no service transmission between a base station and a terminal, a main radio (MR) with high energy consumption can be turned off and the LP-WUR can be turned on to receive a low power signal sent by the base station; when there is service transmission, the base station activates the main radio through a low power wake-up signal to complete the service transmission, which can greatly save the power consumption of the terminal when there is no service transmission.

However, receiving sensitivity of the LP-WUR is low, and the processing method in the related art may result in relatively large time/frequency deviation, thereby affecting reception of low-power receiving signals.

### SUMMARY

Embodiments of the present disclosure provide a signal processing method and device and readable storage medium, which can ensure reception of low-power reception signals.

In a first aspect, one embodiment of the present disclosure provides a signal processing method, applied to a first device, including:
in an extremely low power consumption state, receiving a first signal and/or a second signal sent by a network device;
obtaining at least one of first synchronization information and first wake-up information according to the first signal and/or the second signal;
receiving a wake-up signal according to at least one of the first synchronization information and the first wake-up information.

Optionally, the method further includes:
triggering a second device to perform signal transmission according to at least one of the first synchronization information and the first wake-up information.

Optionally, the first signal includes low power synchronizing signal (LP-SS); and/or,
the second signal includes a low power wake-up signal (LP-WUS).

Optionally, the receiving a first signal and/or a second signal sent by a network device, includes:
receiving the first signal in a periodic, aperiodic or first synchronization raster manner, wherein the first signal includes the first synchronization information;
receiving the second signal according to the first signal, wherein the second signal includes the first wake-up information;
wherein the first synchronization raster is used to determine frequency information of the first signal.

Optionally, the receiving the first signal in a first synchronization raster manner, includes:
obtaining parameters of the first synchronization raster; receiving the first signal according to the parameters of the first synchronization raster, wherein the parameters of the first synchronization raster include one or more of a starting frequency, an ending frequency, a frequency bandwidth, and a maximum number of searches; or,
determining a first target global synchronization signal number (GSCN); determining the first synchronization raster according to a first correspondence relationship and the first target GSCN; receiving the first signal according to the first synchronization raster; wherein the first correspondence relationship is a correspondence relationship between GSCN and the synchronization raster.

Optionally, the receiving the second signal according to the first signal, includes:
determining a resource location of the second signal according to a resource location of the first signal; receiving the second signal according to the resource location of the second signal, wherein the second signal includes the first wake-up information; or
receiving the second signal according to first synchronization information carried by the first signal.

Optionally, the receiving a second signal sent by a network device, includes:
receiving the second signal in a periodic, non-periodic or second synchronization raster manner; wherein the second signal includes the first synchronization information and the first wake-up information;
wherein the second synchronization raster is used to determine frequency information of the second signal.

Optionally, the receiving the second signal in a second synchronization raster manner, includes:
obtaining parameters of the second synchronization raster; receiving the second signal according to the parameters of the second synchronization raster; wherein the parameters of the second synchronization raster include one or more of a starting frequency, an ending frequency, a frequency bandwidth, and a maximum number of searches; or
determining a second target GSCN; determining the second synchronization raster according to a second corresponding relationship and the second target GSCN; receiving the second signal according to the second synchronization raster; wherein the second corresponding relationship is a corresponding relationship between GSCN and the synchronization raster.

Optionally, the method further includes:
obtaining a receiving window parameter corresponding to the non-periodic mode, wherein the receiving window parameter includes one or more of a window period, a duration, a window start time, and an effective time of the receiving window.

Optionally, the first synchronization information includes first-level synchronization information, and the method further includes:
sending first indication information to the second device, wherein the first indication information is used to indicate the first-level synchronization information.

Optionally, the receiving a first signal and/or a second signal sent by a network device, includes:
periodically receiving the first signal and/or the second signal within a first receiving window.

Optionally, the obtaining at least one of first synchronization information and first wake-up information according to the first signal and/or the second signal, includes:
obtaining the first synchronization information according to the first signal and/or the second signal, wherein the first synchronization information includes second-level synchronization information.

Optionally, the first receiving window is determined by one or more of the following manners:
determining through a second receiving window;
determining by a third signal;
determining by a second receiving window and a third signal;
wherein the second receiving window is a receiving window used by the second device to obtain first-level synchronization information, and the third signal includes a window parameter of the first receiving window or a first parameter, wherein the first parameter is used to determine the first receiving window.

Optionally, the first receiving window is determined through the second receiving window in a way including one or more of the following:
determining the first receiving window by a time offset between a start time or an end time of the second receiving window and a start time of the first receiving window;
determining the first receiving window by a time offset between a start time or an end time of the second receiving window and an end time of the first receiving window;
determining the first receiving window according to a relationship between a window parameter of the second receiving window and the window parameter of the first receiving window;
determining an effective time of the first receiving window through the second receiving window;
determining one or more receiving windows included in the second receiving window as the first receiving window; or determining a part of one second receiving window as the first receiving window.

Optionally, the first receiving window is determined through the third signal in a way including one or more of the following:
determining the first receiving window by using the window parameter of the first receiving window;
determining one or more receiving windows included in the second receiving window as the first receiving window; or determining a part of one second receiving window as the first receiving window.

Optionally, the first receiving window is determined through the second receiving window and the third signal in a way including:
determining the first receiving window according to a first parameter in the third signal and the second receiving window, wherein the first parameter includes one or more of the following:
a time offset between a start time of the first receiving window and a start time of the second receiving window, and
relationship between a duration of the first receiving window and a duration of the second receiving window.

Optionally, the obtaining at least one of first synchronization information and first wake-up information according to the first signal and/or the second signal, includes:
receiving a second indication sent by the second device, wherein the second indication is used to indicate first precision synchronization information;
according to the second indication, and the first signal and/or the second signal, obtaining the first synchronization information, wherein the first synchronization information includes second precision synchronization information.

Optionally, the method further includes:
sending a third indication to the second device, wherein the third indication is used to indicate the second precision synchronization information.

Optionally, the method further includes:
sending a third signal according to at least one of the first synchronization information and the first wake-up information.

Optionally, the sending a third signal according to at least one of the first synchronization information and the first wake-up information, includes:
in case of determining to transmit the third signal, determining a resource location of the third signal according to the first signal and/or the second signal;
sending the third signal according to the resource location of the third signal.

Optionally, the determining a resource location of the third signal according to the first signal and/or the second signal, includes:
obtaining position relationship information between the first signal and the third signal, and/or position relationship information between the second signal and the third signal; determining the resource location of the third signal according to the resource location of the first signal and the position relationship information between the first signal and the third signal, and/or the resource location of the second signal and the position relationship information between the second signal and the third signal; or
determining the resource location of the third signal according to the resource information of the first signal and/or the second signal.

Optionally, the position relationship information includes one or more of the following: time domain offset, frequency range offset, frequency offset; or
the resource location includes one or more of the following: a time domain position of signal transmission, a frequency domain position of signal transmission;
wherein the time domain position of the signal transmission includes one or more of transmission period, subframe position, and symbol position within the subframe; the frequency domain position of the signal transmission includes one or more of center frequency, starting carrier, and ending carrier.

Optionally, the position relationship information between the first signal and the third signal, and/or position relationship information between the second signal and the third signal, is obtained in one or more of the following manners:
broadcast signal;
pre-definition
high-level pre-configuration;
downlink signal or channel.

Optionally, the method further includes:
determining whether to transmit a third signal according to the first signal and/or the second signal.

Optionally, the determining whether to transmit a third signal according to the first signal and/or the second signal, includes:
in case of receiving wake-up information and/or activation information carried by the second signal, determining to transmit the third signal; or,
in case of receiving sleep information carried by the first signal and/or the second signal, determining to not transmit the third signal.

Optionally, the wake-up information and/or activation information is carried by a dedicated signal for activating the first terminal.

Optionally, the third signal includes one or more of the following:
uplink data or signal or channel, downlink data or signal or channel, uplink data signal, downlink data signal, semi-persistent scheduling SPS resources, configured grant (CG) resources, uplink control signal, downlink control signal, reference signal, broadcast signal.

Optionally, the first synchronization information includes first precision synchronization information and second precision synchronization information, wherein accuracy of the first precision synchronization information is lower than that of the second precision synchronization information.

Optionally, the first precision synchronization information includes one or more of the following:
a reception time domain deviation of the second signal, a receiving frequency domain deviation of the second signal, a false-alarm probability of the second signal, and a receiving missed detection probability of the second signal; wherein the reception time domain deviation of the second signal satisfies a first threshold, the receiving frequency domain deviation of the second signal satisfies a second threshold, the false-alarm probability of the second signal satisfies a third threshold, and the receiving missed detection probability of the second signal satisfies a fourth threshold;
   and/or,
the second precision synchronization information includes one or more of the following:
a receiving time domain deviation of the second signal, a receiving frequency domain deviation of the second signal, a false-alarm probability of the second signal, and a receiving missed detection probability of the second signal; wherein the receiving time domain deviation of the second signal satisfies a fifth threshold, the receiving frequency domain deviation of the second signal satisfies a sixth threshold, the false-alarm probability of the second signal satisfies a seventh threshold, and the receiving missed detection probability of the second signal satisfies an eighth threshold.

In a second aspect, one embodiment of the present disclosure provides a signal processing method, applied to a network device, including:
sending a first signal and/or a second signal to a first device, thereby enabling the first device to obtain at least one of first synchronization information and first wake-up information according to the first signal and/or the second signal, and receive a wake-up signal according to at least one of the first synchronization information and the first wake-up information.

Optionally, the method further includes:
sending a third signal to the first device.

Optionally, the sending a first signal and/or a second signal to a first device, includes:
sending the first signal to the first device in a first period;
sending a second signal when service transmission or paging is required.

Optionally, the sending a second signal, includes:
sending the second signal with a second period within a first sending time window; or
determining a sending resource location of the second signal according to a third signal; sending the second signal according to the sending resource location;
wherein the first sending time window is determined according to a second receiving window, wherein the second receiving window is a receiving window used by the second device to obtain first-level synchronization information.

Optionally, the determining a sending resource location of the second signal according to a third signal, includes:
determining a position relationship parameter of the second signal and the third signal by one or more of the following manners;
determining a sending resource position of the second signal according to the position relationship parameter;
wherein the manners include:
broadcast signal;
pre-definition;
high-level pre-configuration;
downlink signal or channel.

Optionally, the first signal includes first information, and the first information is used to receive the second signal and/or the third signal; or
the second signal includes information of the third signal; or
the second signal includes the first wake-up information.

In a third aspect, one embodiment of the present disclosure provides a signal processing method, applied to a second device, including:
in response to a trigger of a first device, performing signal transmission according to first synchronization information and/or first wake-up information;
wherein at least one of the first synchronization information and the first wake-up information is obtained according to a first signal and/or a second signal of a network device.

Optionally, the method further includes:
receiving at least one of first synchronization information and first wake-up information sent by the first device; or
receiving second indication information sent by the first device, wherein the second indication information is used to indicate at least one of the first synchronization information and the first wake-up information.

Optionally, the method further includes:
sending a second indication to the first device, wherein the second indication is used to indicate first precision synchronization information.

Optionally, the method further includes:
receiving a third indication sent by the first device, wherein the third indication is used to indicate second precision synchronization information.

In a fourth aspect, one embodiment of the present disclosure provides a signal processing device, applied to a first device, including:
a first receiving unit used to, in an extremely low power consumption state, receive a first signal and/or a second signal sent by a network device;
a first obtaining unit used to obtain at least one of first synchronization information and first wake-up information according to the first signal and/or the second signal;
a first processing unit used to receive a wake-up signal according to at least one of the first synchronization information and the first wake-up information.

In a fifth aspect, one embodiment of the present disclosure provides a signal processing device, applied to a first device, including: a memory, a transceiver, and a processor;
wherein the memory is used to store a computer program; the transceiver is used to send and receive data under the control of the processor; and the processor is used to read the computer program in the memory and perform the following operations:
in an extremely low power consumption state, receiving a first signal and/or a second signal sent by a network device;
obtaining at least one of first synchronization information and first wake-up information according to the first signal and/or the second signal;
receiving a wake-up signal according to at least one of the first synchronization information and the first wake-up information.

In a sixth aspect, one embodiment of the present disclosure provides a signal processing device, applied to a network device, including:
a first sending unit used to send a first signal and/or a second signal to a first device, thereby enabling the first device to obtain at least one of first synchronization information and first wake-up information according to the first signal and/or the second signal, and receive a wake-up signal according to at least one of the first synchronization information and the first wake-up information.

In a seventh aspect, one embodiment of the present disclosure provides a signal processing device, applied to a network device, including: a memory, a transceiver, and a processor;
wherein the memory is used to store a computer program; the transceiver is used to send and receive data under the control of the processor; and the processor is used to read the computer program in the memory and perform the following operations:
sending a first signal and/or a second signal to a first device, thereby enabling the first device to obtain at least one of first synchronization information and first wake-up information according to the first signal and/or the second signal, and receive a wake-up signal according to at least one of the first synchronization information and the first wake-up information.

In an eighth aspect, one embodiment of the present disclosure provides a signal processing device, applied to a second device, including:
a first processing unit used to, in response to a trigger of a first device, perform signal transmission according to first synchronization information and/or first wake-up information;
wherein at least one of the first synchronization information and the first wake-up information is obtained according to a first signal and/or a second signal of a network device.

In a ninth aspect, one embodiment of the present disclosure provides a signal processing device, applied to a second device, including: a memory, a transceiver, and a processor;
wherein the memory is used to store a computer program; the transceiver is used to send and receive data under the control of the processor; and the processor is used to read the computer program in the memory and perform the following operations:
in response to a trigger of a first device, performing signal transmission according to first synchronization information and/or first wake-up information;
wherein at least one of the first synchronization information and the first wake-up information is obtained according to a first signal and/or a second signal of a network device.

In a tenth aspect, one embodiment of the present disclosure provides a processor-readable storage medium, including a computer program stored thereon; wherein the computer program is used to cause a processor to execute steps of the above method.

In the embodiment of the present disclosure, in a low power consumption state, the first synchronization information and/or the first wake-up information can be obtained through the received first signal and/or the second signal, thereby ensuring reception of the wake-up signal.

### BRIEF DESCRIPTION OF THE DRAWINGS

FIG. 1 is a first flowchart of a signal processing method according to an embodiment of the present disclosure;
FIG. 2 is a second flowchart of a signal processing method according to an embodiment of the present disclosure;
FIG. 3 is a third flowchart of a signal processing method according to an embodiment of the present disclosure;
FIG. 4 is a first schematic diagram showing signal transmission according to an embodiment of the present disclosure;
FIG. 5 is a second schematic diagram showing signal transmission according to an embodiment of the present disclosure;
FIG. 6 is a first schematic diagram of a signal transmission device according to an embodiment of the present disclosure;
FIG. 7 is a second schematic diagram of a signal transmission device according to an embodiment of the present disclosure;
FIG. 8 is a third schematic diagram of a signal transmission device according to an embodiment of the present disclosure;
FIG. 9 is a fourth schematic diagram of a signal transmission device according to an embodiment of the present disclosure;
FIG. 10 is a fifth schematic diagram of a signal transmission device according to an embodiment of the present disclosure; and
FIG. 11 is a sixth schematic diagram of a signal transmission device according to an embodiment of the present disclosure.

### DETAILED DESCRIPTION

In the embodiment of the present application, the term "and/or" describes association relationship of associated objects, indicating that there can be three relationships, for example, A and/or B means that there are three situations: there is A alone, there are both A and B, there is B alone. The character "/" generally indicates that before and after related objects are in an "or" relationship.

In the embodiment of the present application, the term "plurality" refers to two or more than two, and other quantifiers are similar.

The technical solutions in the embodiments of the present application will be clearly and completely described below with reference to the accompanying drawings in the embodiments of the present application. Obviously, the described embodiments are only some embodiments of the present application, rather than all embodiments. Based on the embodiments in the present application, all other embodiments obtained by those of ordinary skill in the art without creative efforts fall within the scope of protection of the present application.

The embodiments of the present application provide a signal processing method and device, which can ensure reception of low-power reception signals and performance of receiving normal signals after the device is re-awakened.

The method and the device are based on the same application concept. Since the principles of solving problems in the method and the device are similar, reference may be made to each other for implementations of the device and the method, the repetition of which is not further provided herein.

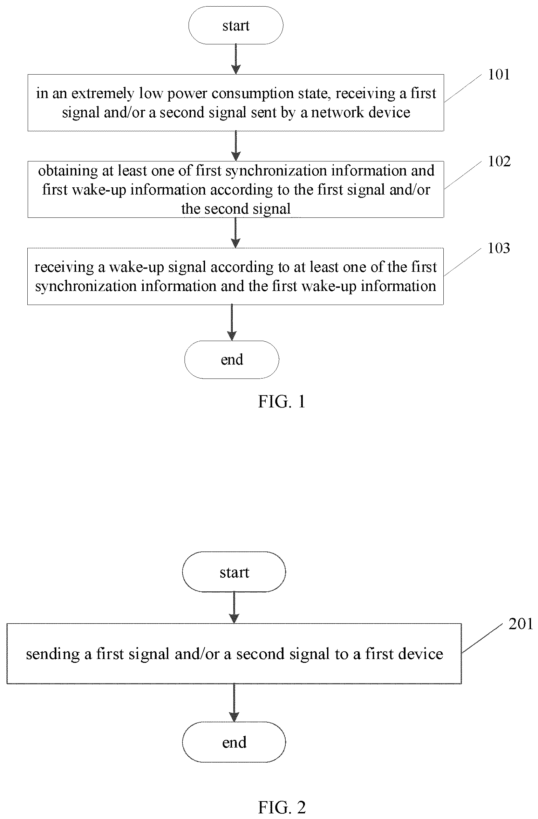

Referring to FIG. 1, FIG. 1 is a flowchart of a signal processing method according to an embodiment of the present disclosure, which is applied to a first device. As shown in FIG. 1, the method includes the following steps:

Step 101: in an extremely low power consumption state, receiving a first signal and/or a second signal sent by a network device.

The solution of the embodiment of the present disclosure can be applied to the first device, and the first device includes a first terminal and a second device includes a second terminal. Optionally, the first terminal can be MR (Main Radio, Main air interface or Main device), or LP-WUR, or any terminal. Correspondingly, the second terminal can be LP-WUR, MR, or any other terminal. The above first terminal and second terminal can be independent terminals or devices, or can be set in the same terminal or device.

The first signal may be a low power synchronizing signal (LP-SS), and the second signal may be a low power wake-up signal (LP-WUS).

In the embodiments of the present disclosure, the first signal and/or the second signal may be received in different ways. The specific way to be adopted may be determined by one or more ways of protocol pre-definition, high-level configuration, and dynamic signaling (physical downlink control channel (PDCCH), media access control (MAC) control element (CE)). Specifically, the way to receive the first signal and/or the second signal may include:
a first mode: receiving the first signal in a periodic, non-periodic or first synchronization raster manner, where the first signal includes the first synchronization information; receiving the second signal according to the first signal, where the second signal includes first wake-up information. The first synchronization raster is used to determine frequency information of the first signal. This mode can be applied to the case where the first device is a first terminal, and the first terminal can be, for example, an MR, or an LP-WUR, or any terminal.

Optionally, the first device may obtain the above periodic, non-periodic or first synchronization raster in one or more of the following ways:
broadcast signal, such as system information block (SIB), physical broadcast channel (PBCH), etc.
predefined;
high-level pre-configuration;
downlink signal or channel, such as physical downlink control channel (PDCCH), physical downlink shared channel (PDSCH), etc.

For example, the first device can receive the first signal in a first period, and the first period can be set as needed, such as being defined by one or more modes including broadcast signal (SIB, PBCH), predefined mode, high-level pre-configuration, and downlink signal/channel (PDCCH, PDSCH).

The first device may receive the first signal in a non-periodic manner. In this case, the first device may also obtain a receiving window parameter corresponding to the non-periodic manner, and receive the first signal according to the receiving window parameter. The receiving window parameter includes one or more of a window period, a duration, a window start time, and an effective time of the receiving window. The effective time of the receiving window means that the first signal can be received within the receiving window of the time indicated by the effective time, and the receiving window parameter is invalid outside the time indicated by the effective time.

The first device may receive the first signal based on the first synchronization raster, where the first synchronization raster is used to determine frequency information of the first signal, including frequency information for which the first synchronization raster performs frequency-domain blind detection of the first signal.

In this case, one mode may be to obtain parameters of the first synchronization raster; receive the first signal according to the parameters of the first synchronization raster, where the parameters of the first synchronization raster include one or more of a starting frequency, an ending frequency, a bandwidth, and a maximum number of searches. One mode may be to determine a target GSCN; determine the first synchronization raster according to a first correspondence relationship and the target GSCN; receive the first signal according to the first synchronization raster, where the first correspondence relationship is a correspondence relationship between GSCN and the synchronization raster. The target GSCN may be GSCN corresponding to current execution of the embodiments of the present disclosure, or GSCN corresponding to other times, scenarios, or the like. The first correspondence relationship may include the number of GSCNs corresponding to the synchronization raster, GSCN index corresponding to a starting position of the synchronization raster, GSCN index corresponding to an ending position of the synchronization raster, and the like.

In the first mode, when receiving the second signal, the first device may determine a resource position of the second signal according to a resource position of the first signal; and receive the second signal according to the resource position of the second signal, where the second signal includes the first wake-up information. For example, resource position offset parameters of the second signal and the first signal, such as time domain offset/frequency domain offset, etc., may be defined by one or more ways such as broadcast signal (such as SIB, PBCH), predefined mode, high-level pre-configuration, downlink signal or channel (PDCCH, PDSCH), and then the second resource position of the second signal may be determined according to the first resource position of the first signal. Alternatively, the first device may also receive the second signal according to the first synchronization information carried by the first signal, and the first synchronization information is used for receiving the wake-up signal.

In one embodiment of the present disclosure, the first synchronization information includes first precision synchronization information (also referred to as coarse synchronization information) and second precision synchronization information (also referred to as fine synchronization information), where precision of the first precision synchronization information is lower than precision of the second precision synchronization information.

The first precision synchronization information includes one or more of the following: a reception time domain deviation of the second signal, a receiving frequency domain deviation of the second signal, a false-alarm probability of the second signal, and a receiving missed detection probability of the second signal; where the reception time domain deviation of the second signal satisfies a first threshold, the receiving frequency domain deviation of the second signal satisfies a second threshold, the false-alarm probability of the second signal satisfies a third threshold, and the receiving missed detection probability of the second signal satisfies a fourth threshold.

The second precision synchronization information includes one or more of the following: a reception time domain deviation of the second signal, a receiving frequency domain deviation of the second signal, a false-alarm probability of the second signal, and a receiving missed detection probability of the second signal; where the reception time domain deviation of the second signal satisfies a fifth threshold, the receiving frequency domain deviation of the second signal satisfies a sixth threshold, the false-alarm probability of the second signal satisfies a seventh threshold, and the receiving missed detection probability of the second signal satisfies an eighth threshold.

Of course, in actual applications, parameters that can be used as synchronization information are not limited to the information listed above; moreover, for some parameters, the larger the threshold value is, the higher the accuracy of the parameter is; for some parameters (such as frequency domain deviation), the smaller the threshold value is, the higher the accuracy of the parameter is. Therefore, the setting of the above thresholds can be combined with the actual application scenario.

A second mode: receiving the second signal in a periodic, non-periodic or second synchronization raster manner, where the second signal includes the first synchronization information and the first wake-up information. This mode can be applied to the case where the first device is a first terminal, and the first terminal can be, for example, MR, or LP-WUR, or any terminal. Correspondingly, the second device is a second terminal, such as LP-WUR, or MR, or any terminal. The second synchronization raster is used to determine the frequency information of the second signal.

The obtaining of the mode can refer to the description of the aforementioned method embodiment.

For example, the first device can receive the second signal in a second period, and the second period can be set as needed, such as being defined by one or more ways including broadcast signal (SIB, PBCH), predefined mode, high-level pre-configuration, and downlink signal/channel (PDCCH, PDSCH).

The first device can receive the second signal in a non-periodic manner. In this case, the first device can also obtain a receiving window parameter corresponding to the non-periodic manner, and receive the second signal according to the receiving window parameter. The receiving window parameter includes one or more of a window period, a duration, a window start time, and an effective time of the receiving window. The effective time of the receiving window means that the second signal can be received within the receiving window of the time indicated by the effective time, and the receiving window parameter is invalid outside the time indicated by the effective time.

The first device may receive the second signal based on a second synchronization raster, where the second synchronization raster is used to determine frequency information of the second signal, including the frequency information for which the second synchronization raster performs frequency-domain blind detection of the second signal.

In this case, one mode may be to obtain parameters of the second synchronization raster; receive the second signal according to the parameters of the second synchronization raster, where the parameters of the second synchronization raster include one or more of a starting frequency, an ending frequency, a bandwidth, and a maximum number of searches. One mode may be to determine a second target GSCN; determine the second synchronization raster according to a second correspondence relationship and the second target GSCN; receive the second signal according to the second synchronization raster, where the second correspondence relationship is a correspondence relationship between GSCN and the synchronization raster. The second target GSCN may be GSCN corresponding to current execution of the embodiments of the present disclosure, or GSCN corresponding to other times, scenarios, or the like. The second correspondence relationship may include the number of GSCNs corresponding to the synchronization raster, GSCN index corresponding to a starting position of the synchronization raster, GSCN index corresponding to an ending position of the synchronization raster, and the like.

The first synchronization information includes first-level synchronization information. The first synchronization information may be obtained through a third signal, and the third signal includes one or more of the following:
uplink data or signal or channel, downlink data or signal or channel, uplink data signal, downlink data signal, semi-persistent scheduling (SPS) resources, configured grant (CG) resources, uplink control signal, downlink control signal, reference signal, broadcast signal.

Content included in the first-level synchronization information can refer to the above description of the first synchronization information and the second synchronization information. Further, the first-level synchronization information can be used for the second device (such as LP-WUR) to receive the second signal, and can also be used for the first device to maintain synchronization. If the first device is a first terminal (such as MR), accordingly, the method in the embodiment of the present disclosure may also include: the first device sending first indication information to the second device, where the first indication information is used to indicate the first-level synchronization information, and the first-level synchronization information is used for the second device to receive the second signal. For example, the first indication information may carry the first-level synchronization information, or indicate information related to the first-level synchronization information, etc.

A third mode: periodically receiving the first signal and/or the second signal within a first receiving window. This mode can be applied to the case where the first device is a first terminal, and the first terminal can be, for example, MR, or LP-WUR, or any terminal. Correspondingly, the second device is a second terminal, such as LP-WUR, or MR, or any terminal.

The first receiving window is determined by one or more of the following ways:

### 1. Determined through a second receiving window.

The second receiving window is a receiving window used by the second device to obtain the first-level synchronization information, that is, the second device receives a synchronization signal (such as SSB, CSI-RS, tracking reference signal (TRS), etc.) in the second receiving window to obtain the first-level synchronization information. The second device can obtain window-related parameters through broadcast signal (such as SIB, PBCH, etc.), pre-definition, high-level pre-configuration, downlink channel or signal (such as PDCCH, PDSCH, etc.), etc. The window-related parameters may include: a second receiving window period, a second receiving window start time, a second receiving window duration, a second receiving window end time, etc.

In this way, determining the first receiving window by using the second receiving window includes one or more of the following manners:
determining the first receiving window by a time offset between a start time or an end time of the second receiving window and a start time of the first receiving window;
determining the first receiving window by a time offset between a start time or an end time of the second receiving window and an end time of the first receiving window;
determining the first receiving window by relationship between the window parameters of the second receiving window and the window parameters of the first receiving window, such as a duration of the first receiving window is equal to a difference between a period of the second receiving window and a duration of the second receiving window;
determining an effective time of the first receiving window through the second receiving window, such as the first receiving window is effective during the time when the third signal is not received within the second receiving window period;
determining one or more receiving windows included in the second receiving window as the first receiving window; determining or a part of one second receiving window as the first receiving window.

That is, if the second receiving window includes multiple receiving windows, then one or more receiving windows included therein may be used as the first receiving window. Alternatively, a portion of the length of the second receiving window may be used as a window length of the first receiving window to form the first receiving window. The portion of the length may be set as required, such as 1/N, where N is an integer greater than 0.

### 2. Determined by the third signal:

The determining the first receiving window by using the third signal includes one or more of the following manners:
1) in this manner, the third signal includes window parameters of the first receiving window, such as a first receiving window period, a first receiving window start time, a first receiving window duration, a first receiving window end time, a first receiving window effective time, etc. Then, the first receiving window can be determined according to the window parameters.
2) using one or more receiving windows included in the second receiving window as the first receiving window; or using a part of the second receiving window as the first receiving window.

The specific implementation form of the third signal may refer to the description of the aforementioned method embodiment. That is, if the second receiving window includes multiple receiving windows, then one or more receiving windows included therein may be used as the first receiving window. Alternatively, a portion of the length of the second receiving window may be used as the window length of the first receiving window, thereby forming the first receiving window. The portion of the length may be set as required, such as 1/N, where N is an integer greater than 0.

### 3. Determine through the second receiving window and the third signal:

This step may include: determining the first receiving window according to a first parameter in the third signal and the second receiving window, where the first parameter includes one or more of the following:
a time offset between a start time of the first receiving window and the second receiving window, and a relationship between the duration of the first receiving window and the duration of the second receiving window (such as a multiple relationship, which can be an integer or a fraction).

In this way, interpretation of the first synchronization information can refer to the description of the aforementioned method embodiment. The second device obtains the second precision synchronization information according to the third signal received in the first receiving window, which is used for the first device to receive the first signal and/or the second signal in the second receiving window and obtain the first precision synchronization information; the first device obtains the second precision synchronization information according to the first signal and/or the second signal received in the second receiving window, which is used for the second device to receive the third signal in the first receiving window and obtain the first precision synchronization information. The interpretation of the first precision synchronization information and the second precision synchronization information can refer to the description of the aforementioned embodiment.

Correspondingly, in this manner, the method may further include: the first device sending a third indication to the second device; where the third indication is used to indicate the second precision synchronization information, and the second precision synchronization information is used by the second device to obtain a third signal and obtain the first precision synchronization information.

Step 102: obtaining at least one of first synchronization information and first wake-up information according to the first signal and/or the second signal.

At least one of the first synchronization information and the first wake-up information is used by the first device to receive a wake-up signal, and the first synchronization information and/or the first wake-up information is used by the second device to perform signal transmission. Here, the first wake-up information may include wake-up information or sleep information.

In the embodiment of the present disclosure, the first synchronization information and the first wake-up information may be obtained according to the first signal and the second signal; or, the first wake-up information may be obtained according to the second signal.

Corresponding to the above third mode, in this step, the first device may receive a second indication sent by the second device, where the second indication is used to indicate first precision synchronization information; and, based on the second indication and the first signal and/or the second signal, obtain the first synchronization information, where the first synchronization information includes second precision synchronization information.

Step 103: receiving a wake-up signal according to at least one of the first synchronization information and the first wake-up information.

In the embodiments of the present disclosure, the wake-up signal may be received in a variety of ways. For example, synchronization may be performed according to the first synchronization information, and the wake-up signal may be received according to the first wake-up information; or the wake-up signal may be directly received according to the first wake-up information.

In the embodiment of the present disclosure, in a low power consumption state, the first synchronization information and/or the first wake-up information can be obtained through the received first signal and/or the second signal, thereby ensuring reception of the wake-up signal.

Optionally, On the basis of the above embodiment, the first device may further trigger the second device to perform signal transmission according to at least one of the first synchronization information and the first wake-up information.

For example, the first device may directly send at least one of the first synchronization information and the first wake-up information to the second device; or the first device may send second indication information to the second device, where the second indication information is used to indicate at least one of the first synchronization information and the first wake-up information. Therefore, the solution of the embodiment of the present disclosure can ensure performance of receiving normal signals after the device is re-awakened.

On the basis of the above embodiment, if the first device is an MR, the following steps may be further included:
according to at least one of the first synchronization information and the first wake-up information, transmitting a third signal. The third signal may be explained with reference to the description of the aforementioned method embodiment. Specifically, when it is determined to transmit the third signal, a resource location of the third signal may be determined according to the first signal and/or the second signal; and the third signal may be transmitted according to the resource location of the third signal.

The determining the resource location of the third signal may include any of the following manners:
1) obtaining position relationship information between the first signal and the third signal, and/or position relationship information between the second signal and the third signal; determining the resource position of the third signal according to the resource position of the first signal and the position relationship information between the first signal and the third signal, and/or the resource position of the second signal and the position relationship information between the second signal and the third signal. The position relationship information can be obtained through broadcast signal (such as SIB, PBCH, etc.), pre-definition, high-level pre-configuration, downlink channel or signal (such as PDCCH, PDSCH, etc.), etc., including one or more of the following: time domain offset, frequency range offset, frequency offset.
2) determining a resource location of the third signal according to resource information of the first signal and/or the second signal: where the resource location includes one or more of the following:
   a time domain position of signal transmission and a frequency domain position of signal transmission; where the time domain position of signal transmission includes one or more of transmission period, subframe position, and symbol position within a subframe; the frequency domain position of signal transmission includes one or more of center frequency, starting carrier, and ending carrier.

Optionally, before transmitting the third signal, the method may further include: determining whether to transmit the third signal according to the first signal and/or the second signal.

For example, when wake-up information and/or activation information carried by the second signal is received, it can be determined to transmit the third signal; or, when sleep information carried by the first signal and/or the second signal is received, it can be determined not to transmit the third signal.

The second device is a second terminal, and the wake-up information and/or activation information is carried by a dedicated signal for the second terminal to activate the first terminal. For example, if the second device is an LP-WUR, the wake-up information and/or activation information is carried by a dedicated signal for the LP-WUR to activate the MR.

Through the above manner, the third signal transmission can be facilitated, thereby ensuring normal communication between the first device and the second device.

Referring to FIG. 2, FIG. 2 is a flowchart of a signal processing method according to an embodiment of the present disclosure, which is applied to a network device (such as a base station, etc.). As shown in FIG. 2, the method includes the following steps:
Step 201: sending a first signal and/or a second signal to a first device, enabling the first device to obtain at least one of first synchronization information and first wake-up information according to the first signal and/or the second signal, and receive a wake-up signal according to at least one of the first synchronization information and the first wake-up information.

For explanations of the first synchronization information, the first wake-up information, the first signal and the second signal, reference may be made to the description of the aforementioned method embodiment.

Optionally, the network device may further send a third signal to the first device. For example, the network device may send the first signal to the first device in a first period, or send the second signal when service transmission or paging is required.

Specifically, in the process of sending the first signal to the first device in a first period, the second signal may be sent in a second period within a first sending time window; or
a sending resource location of the second signal can be determined according to the third signal; and the second signal is sent according to the sending resource location.

The first sending time window is determined according to a second receiving window, where the second receiving window is a receiving window used by the second device to obtain first-level synchronization information. For example, a starting position of the first sending window may not be earlier than a starting position of the second receiving window; an ending position of the first sending window may not be earlier than an ending position of the second receiving window; if feedback information of successful access is received, the ending position of the first sending window may be determined by a position of the feedback information of successful access.

The determining a sending resource location of the second signal according to the third signal, includes:
determining a position relationship parameter of the second signal and the third signal by one or more of the following modes; and determining the sending resource location of the second signal according to the position relationship parameter; where the modes include:
broadcast signal; pre-definition; high-layer pre-configuration; downlink signal or channel.

The position relationship parameter may include:
such as minimum time offset, such as M1 synchronization signals/physical broadcast channel signal block (Synchronization Signal and PBCH block, SSB) periods and/or M2 ms and/or M3 frames and/or M4 super-frames and/or M5 discontinuous reception (DRX) periods, etc.

Optionally, in one embodiment of the present disclosure, the first signal includes first information, and the first information is used to receive the second signal and/or the third signal; or, the second signal includes information of the third signal; or, the second signal includes the first wake-up information. The information of the first information or the third signal may be, for example, one or more of synchronization information, wake-up information, sleep information, cell identifier (Cell ID), area identifier (Area ID), UE (group) ID, and time-frequency domain resource location information. When the network device determines to perform service transmission with the terminal, the second signal may carry the wake-up information; when the network device and the terminal have no service transmission requirements, the sleep information is carried in the second signal.

In the embodiment of the present disclosure, in a low power consumption state, the first synchronization information and/or the first wake-up information can be obtained through the received first signal and/or the second signal, thereby ensuring the reception of the wake-up signal.

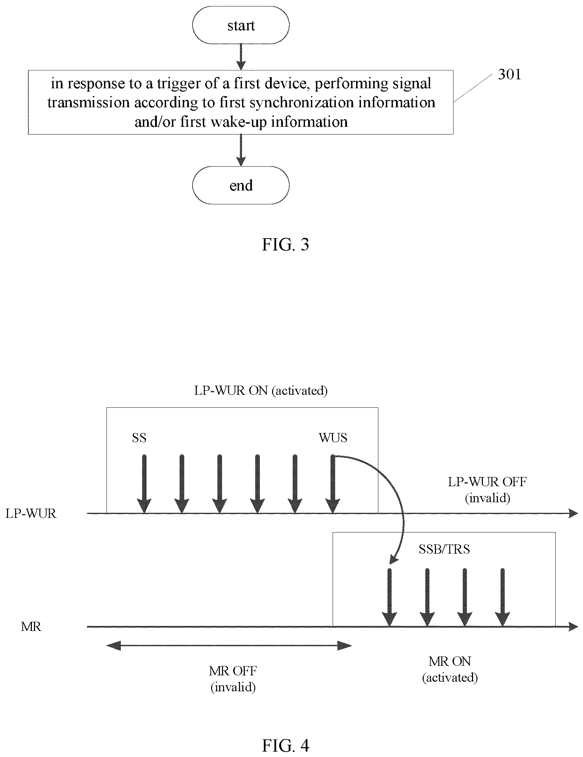

Referring to FIG. 3, FIG. 3 is a flow chart of a signal processing method according to an embodiment of the present disclosure, which is applied to a second device. As shown in FIG. 3, the method includes the following steps:

Step 301: in response to a trigger of a first device, performing signal transmission according to first synchronization information and/or first wake-up information; where at least one of the first synchronization information and the first wake-up information is obtained according to a first signal and/or a second signal of a network device.

Optionally, at least one of the first synchronization information and the first wake-up information is obtained by the first device according to the first signal and/or the second signal of the network device.

The first device includes a first terminal, and the second device includes a second terminal. Optionally, the first terminal may be MR, LP-WUR, or any other terminal. Correspondingly, the second terminal may be LP-WUR, MR, or any other terminal. The first terminal and the second terminal may be independent terminals or devices, or may be set in the same terminal or device.

Optionally, in one embodiment of the present disclosure, the second device may also receive at least one of the first synchronization information and the first wake-up information sent by the first device; or, receive second indication information sent by the first device, where the second indication information is used to indicate at least one of the first synchronization information and the first wake-up information.

Optionally, if the second device is a second terminal (such as LP-WUR), it may further receive first indication information sent by the first device, where the first indication information is used to indicate first-level synchronization information, and the first-level synchronization information is used for the second device to receive the second signal. For example, the first indication information may carry the first-level synchronization information, or indicate information related to the first-level synchronization information, etc.

Optionally, in the embodiment of the present disclosure, the second device may further send a second indication to the first device, where the second indication is used to indicate first precision synchronization information.

Optionally, in the embodiment of the present disclosure, the second device may further receive a third indication sent by the first device, where the third indication is used to indicate second precision synchronization information. The second precision synchronization information is used for the second device to obtain a third signal and obtain the first precision synchronization information. Accordingly, the second device may obtain the third signal and obtain the first precision synchronization information for signal transmission.

The description of the first precision synchronization information and the second precision synchronization information can refer to the description of the aforementioned method embodiment.

In the embodiment of the present disclosure, in a low power consumption state, the first synchronization information and/or the first wake-up information can be obtained through the received first signal and/or the second signal, thereby ensuring reception of the wake-up signal and the signal transmission by the second device.

In the following embodiments, description is provided by taking the base station as an example of a network device.

In one embodiment of the present disclosure, it is assumed that the MR (second device) is continuously turned off, and the LP-WUR (first device) continuously receives the LP-SS (first signal) signal and the LP-WUS (second signal) signal. FIG. 4 is a schematic diagram of signal transmission in an embodiment of the present disclosure. In conjunction with FIG4, the process may include:
Step S1: continuously sending, by a base station, the LP-SS signal in a first period and/or in a specific time window; when it is necessary to perform service transmission with a low-power terminal, sending, by the base station, the LP-WUS signal to wake up a main radio for data transmission.

A minimum time offset (M1 SSB cycles and/or M2 ms and/or M3 frames and/or M4 super-frames and/or M5 DRX cycles) can be defined between a wake-up signal and a reference signal (CSI-RS, TRS)/broadcast signal (SSB)/service-related channel (such as uplink/downlink control signal, uplink/downlink data signal, SPS/CG resources, uplink/downlink control signal, reference signal, broadcast signal) that needs to be received normally after the terminal's main radio wakes up.

Step S2: receiving, by the LP-WUR device, the LP-SS signal in one or more ways of the first period, the non-period, and the first synchronization raster, thereby obtaining synchronization information for receiving the LP-WUS signal and/or determining a resource location of the LP-WUS signal.

The first period of for receiving LP-SS may be defined by a broadcast signal (SIB, PBCH) and/or a predefined manner and/or a high-layer pre-configuration and/or a downlink signal/channel (PDCCH, PDSCH).

LP-WUR receives LP-SS in an aperiodic manner, where the aperiodic manner can be implemented by defining a receiving window parameter for receiving LP-SS. LP-SS signals are received within a time range defined by the receiving window parameter. The receiving window parameter, for example, may include a window period, duration, window start time, and receiving window effective time (LP-SS is received through this window within a specific time, and the window parameter is invalid outside the time).

LP-WUR receives LP-SS through a first synchronization raster that can be defined by a broadcast signal (SIB, PBCH) and/or a predefined manner and/or a high-level pre-configuration and/or a downlink signal/channel (PDCCH, PDSCH). The frequency information for the first synchronization raster to perform blind detection of the first signal in the frequency domain can be defined in the following manner:
1) determining the first synchronization raster by defining parameters such as a starting frequency, an ending frequency, a bandwidth, a maximum number of searches, etc. of the first synchronization raster, and then receiving the LP-SS;
2) determining the first synchronization raster by defining correspondence between the synchronization raster and GSCN, such as GSCN index corresponding to a start position of the first synchronization raster, the number of GSCNs corresponding to the first synchronization raster, and the GSCN index corresponding to an end position of the first synchronization raster.

Optionally, the LP-SS signal may carry information indicating LP-WUS reception, which is used to indicate whether to receive the LP-WUS signal after receiving the LP-SS signal; this information may be:
LP-SS sequence length, for example, when the sequence length is M, the LP-WUS signal is not received, and when the sequence length is N, the LP-WUS signal is received;
format of the sequence itself, such as a first sequence indicating that the terminal receives the LP-WUS signal, and a second sequence indicating that the terminal does not receive the LP-WUS signal.

Optionally, LP-WUR may determine the resource location of the LP-WUS signal through LP-SS, for example, resource location offset parameters between LP-WUS and LP-SS may be defined through broadcast signal (SIB, PBCH), predefined manner, and high-level pre-configuration, such as time domain offset/frequency domain offset, etc..

The LP-SS signal may carry synchronization information, which may be used for receiving the wake-up signal of the LP-WUR, and may include, for example, one or more of Cell ID, Area ID, UE (group) ID, and time-frequency domain resource location information.

The synchronization information may include: fine synchronization information (second precision synchronization information) and coarse synchronization information (first precision synchronization information).

The coarse synchronization information may be a wake-up signal of LP-WUR and/or a third signal having a higher indicator such as reception time domain deviation, frequency domain deviation, false-alarm probability, missed detection probability. The higher indicator is defined as that reception time domain deviation of a second signal satisfies a first threshold, a frequency domain deviation satisfies a second threshold, a false-alarm probability satisfies a third threshold, and a missed detection probability satisfies a fourth threshold. Interpretation of the third signal may refer to the description of the aforementioned method embodiment.

The fine synchronization information may be a wake-up signal of LP-WUR and/or a third signal having a lower indicator such as reception time domain deviation, frequency domain deviation, false-alarm probability, missed detection probability. The lower indicator is defined as that the reception time domain deviation of the second signal satisfies the fifth threshold, the frequency domain deviation satisfies the sixth threshold, the false-alarm probability satisfies the seventh threshold, and the missed detection probability satisfies the eighth threshold.

Step S3: receiving, by LP-WUR, continuous LP-SS signals to obtain coarse synchronization information (LP-WUR calibrates the time/frequency offset through the detected LP-SS), and determining a receiving position of the LP-WUS through relationship (time/frequency offset) between a sending position of the LP-WUS and the LP-SS. When the LP-WUS signal carrying the wake-up information is received, the main radio is activated for normal data transmission, otherwise the main radio is always in an extremely low power consumption state, during which no uplink/downlink signals are sent or received.

In practical applications, a sending position of the LP-WUS and the resource position offset parameters of the LP-SS, such as time domain offset/frequency domain offset, can be defined by one or more of the following modes: broadcast signal (SIB, PBCH), predefined manner, high-level pre-configuration, downlink signal/channel (PDCCH, PDSCH).

LP-WUR can wake up the main radio to send and receive data normally by sending an activation signal to the main radio. The activation signal can be a specific sequence and/or a voltage amplitude.

Step S4: optionally, after waking up the main radio, feeding back, by LP-WUR, a successful wake-up signal to the base station, so that the base station can determine a sending location of data service and/or stop sending LP-SS and LP-WUS signals through the successful wake-up signal.

The successful wake-up signal may be a feedback signal of successful access sent after activation of the main radio, and may be a specific sequence and/or a 1-bit wake-up success indication field added to an existing uplink signal (uplink control information (UCI) or MAC-CE).

In one embodiment of the present disclosure, the MR is continuously turned off and the LP-WUR continuously receives the LP-WUS signal. The process may include:
Step S1: continuously sending, by the base station, LP-WUS signals in a first period and/or in a specific time window. When it is necessary to perform service transmission with the low-power terminal, the LP-WUS signal carries wake-up information to wake up the main radio for data transmission; otherwise, the LP-WUS signal carries sleep information.

In particular, a minimum time offset (M1 SSB cycles and/or M2 ms and/or M3 frames and/or M4 super-frames and/or M5 DRX cycles) can be defined between a wake-up signal and a reference signal (CSI-RS, TRS)/broadcast signal (SSB)/service-related channel (such as uplink/downlink control signal, uplink/downlink data signal, SPS/CG resources, uplink/downlink control signal, reference signal, broadcast signal) that needs to be received normally after the terminal's main radio wakes up.

Step S2: continuously receiving, by the LP-WUR device, the LP-WUS signal in a second periodic, non-periodic, and second synchronization raster to obtain synchronization information and/or wake-up information.

The second period of for receiving LP-WUS may be obtained through one or more of a broadcast signal (SIB, PBCH), a predefined manner, and a high-layer pre-configuration.

LP-WUR receives LP-WUS in an aperiodic manner, where the aperiodic manner can be implemented by defining a receiving window parameter for receiving LP-WUS. LP-WUS signals are received within a time range defined by the receiving window parameter, such as a window period, duration, window start time, and receiving window effective time (LP-WUS is received through this window within a specific time, and the window parameter is invalid outside the time).

LP-WUR receives LP-WUS through a second synchronization raster that can be defined by one or more of a broadcast signal (SIB, PBCH), a predefined manner, a high-level pre-configuration, and a downlink signal/channel (PDCCH, PDSCH). The frequency information for the second synchronization raster to perform blind detection of the first signal in the frequency domain can be defined in the following manner:
1) determining the second synchronization raster by defining parameters such as a starting frequency, an ending frequency, a bandwidth, a maximum number of searches, etc. of the second synchronization raster, and then receiving the LP-SS;
2) determining the second synchronization raster by defining correspondence between the synchronization raster and GSCN, such as GSCN index corresponding to a start position of the second synchronization raster, the number of GSCNs corresponding to the second synchronization raster, and the GSCN index corresponding to an end position of the second synchronization raster.

The LP-WUS signal may carry synchronization information and/or wake-up information, such as one or more of wake-up information, sleep information, Cell ID, Area ID, UE (group) ID, and time-frequency domain resource location information.

The above synchronization information can be used for receiving the wake-up signal of LP-WUR, including: coarse synchronization information (second precision synchronization information) and fine synchronization information (first precision synchronization information).

The coarse synchronization information may be a wake-up signal of LP-WUR and/or a third signal having a higher indicator such as reception time domain deviation, frequency domain deviation, false-alarm probability, missed detection probability. The higher indicator is defined as that reception time domain deviation of a second signal satisfies a first threshold, a frequency domain deviation satisfies a second threshold, a false-alarm probability satisfies a third threshold, and a missed detection probability satisfies a fourth threshold. Interpretation of the third signal may refer to the description of the aforementioned method embodiment.

The fine synchronization information may be a wake-up signal of LP-WUR and/or a third signal having a lower indicator such as reception time domain deviation, frequency domain deviation, false-alarm probability, missed detection probability. The lower indicator is defined as that the reception time domain deviation of the second signal satisfies the fifth threshold, the frequency domain deviation satisfies the sixth threshold, the false-alarm probability satisfies the seventh threshold, and the missed detection probability satisfies the eighth threshold.

Step S3: when the terminal obtains the wake-up information in the LP-WUS signal, activating the main radio to perform normal data transmission. Otherwise, the main radio is always in an extremely low power consumption state, during which no uplink/downlink signals are sent or received.

In particular, if LP-WUR and MR are set on two devices, LP-WUR can wake up the main radio for normal data transmission and reception by sending an activation signal to the main radio. The activation signal can be a specific sequence and/or a voltage amplitude.

Step S4: optionally, after waking up the main radio, feeding back, by LP-WUR, a successful wake-up signal to the base station, so that the base station can determine a sending location of data service and/or stop sending LP-SS and LP-WUS signals through the successful wake-up signal.

The successful wake-up signal may be a feedback signal of successful access sent after activation of the second device, and may be a specific sequence and/or a 1-bit wake-up success indication field added to an existing uplink signal (uplink control information (UCI) or MAC-CE).

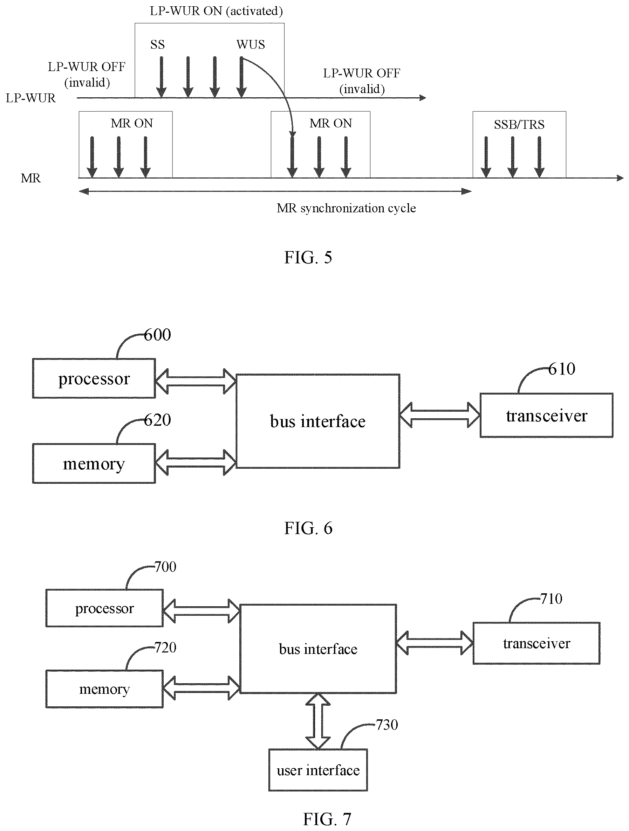

In one embodiment of the present disclosure, MR wakes up periodically, and LP-WUR periodically receives LP-SS and LP-WUS. FIG. 5 is a schematic diagram of signal transmission in an embodiment of the present disclosure. In conjunction with FIG. 5, the process may include:
Step S1: MR periodically receives synchronization signal (SSB, CSI-RS, TRS) in a second receiving window to obtain synchronization information and/or system information, during which LP-WUR can be kept in a closed state.

Relevant parameters of the second receiving window may be obtained through one or more of a broadcast signal (SIB, PBCH), a predefined manner, a high-level pre-configuration, and a downlink signal/channel (PDCCH, PDSCH). The relevant parameters may include: a second receiving period, a second receiving start time, a second duration, and a second receiving end time.

The MR may also normally receive uplink/downlink signals during the duration of the second receiving window, and be in a dormant state between the receiving end time and a receiving start time of the next receiving window, during which the uplink/downlink signals are not received.

In particular, a minimum time offset (M1 SSB cycles and/or M2 ms and/or M3 frames and/or M4 super-frames and/or M5 DRX cycles) can be defined between a wake-up signal and a new radio (NR) signal/channel. The NR signal and/or channel can be: uplink, downlink data/signal/channel; uplink/downlink data signal, SPS/CG resources, uplink/downlink control signal, reference signal, broadcast signal, etc.

Step S2: the LP-WUR device is turned on during the sleep period of the low-power terminal main radio, periodically receive LP-SS and/or LP-WUS signals in the first receiving window, thereby obtaining synchronization and/or wake-up information.

The first receiving window can be determined by parameters of the second receiving window, which can be any of the following:
a start time of the first receiving window is an end time of the second receiving window;
a duration of the first receiving window is a difference between a period of the second receiving window and a duration of the second receiving window;
The end time of the first receiving window is the start time of the next second receiving window;
a first receiving window may be obtained through a broadcast signal and/or a data signal and/or a control signal.

The parameter of the first receiving window may be: a first receiving period, a first receiving start time, a first duration, and a first receiving end time.

The first receiving window is determined by the second receiving window and the third signal, which specifically can be:
the third signal carries parameters for determining the first receiving window with reference to the second receiving window, which may include: a time offset between a starting position of the first window and the second window, and a multiple relationship (which may be an integer or a fraction) between the duration of the first window and the duration of the second window.

Step S3: the base station continuously sends LP-SS and/or LP-WUS signals in the second receiving window of the terminal. When it is necessary to perform service transmission with the low-power terminal, the base station sends an LP-WUS signal carrying wake-up information to wake up the main radio for data transmission; otherwise, the base station does not send an LP-WUS signal or carries sleep information in the LP-WUS signal.

Step S4: the LP-WUR receives the LP-WUS and/or LP-SS in the first receiving window in a manner which can be referred to the description of the above embodiment. When the LP-WUR obtains the wake-up information from the LP-WUS signal, the main radio is activated to perform normal data transmission. Otherwise, the main radio is always in an extremely low power consumption state, during which no uplink/downlink signals are sent or received.

LP-WUR can wake up the main radio to perform normal data transmission and reception by sending an activation signal to the main radio. The activation signal can be a specific sequence and/or a voltage amplitude.

Step S5: optionally, after waking up the main radio, LP-WUR feeds back a successful wake-up signal to the base station, so that the base station can determine a sending location of data service and/or stop sending LP-SS and LP-WUS signals through the successful wake-up signal.

The successful wake-up signal may be a feedback signal of successful access sent after activation of the second device, and may be a specific sequence and/or a 1-bit wake-up success indication field added to an existing uplink signal.

In one embodiment of the present disclosure, the MR receives an uplink/downlink signal based on LP-SS/LP-WUS. The process may include:
Step S1: after receiving the LP-WUS signal carrying the wake-up information, the LP-WUR wakes up the MR to perform normal uplink/downlink signal transmission and reception.

In particular, a minimum time offset (M1 SSB cycles and/or M2 ms and/or M3 frames and/or M4 super-frames and/or M5 DRX cycles) can be defined between a wake-up signal and a reference signal (CSI-RS, TRS)/broadcast signal (SSB)/service-related channel (such as uplink/downlink control signal, uplink/downlink data signal, SPS/CG resources, uplink/downlink control signal, reference signal, broadcast signal) that needs to be received normally after the terminal's main radio wakes up.

Step S2: the MR device may determine a resource location for uplink/downlink signal transmission and reception based on an activation signal sent by a LP-SS and/or LP-WUS signal and/or LP-WUR.

The uplink/downlink signals sent and received by the MR device may be: uplink/downlink data signal, SPS/CG resource, uplink/downlink control signal, reference signal, broadcast signal, and successful wake-up signal.

The position information relationship such as time domain offset, frequency range offset, and frequency offset between the activation signal sent by LP-WUS and/or LP-SS and/or LP-WUR and the uplink/downlink signal sent and received by MR is defined through one or more of broadcast signal (SIB, PBCH), predefined manner, high-level pre-configuration, and downlink signals/channel (PDCCH, PDSCH).

The MR device determines a receiving resource location of the uplink/downlink signal through the activation signal sent by LP-WUS and/or LP-SS and/or LP-WUR. The resource location information includes: a time domain position of signal transmission (transmission period, subframe position, symbol position within the subframe), and frequency domain position of the signal transmission (center frequency, starting carrier, and ending carrier).

Step S3: optionally, after waking up the main radio, LP-WUR feeds back a successful wake-up signal to the base station, so that the base station can determine a sending location of data service and/or stop sending LP-SS and LP-WUS signals through the successful wake-up signal.

The successful wake-up signal may be a feedback signal of successful access sent after activation of the second device, and may be a specific sequence and/or a 1-bit wake-up success indication field added to an existing uplink signal.

In one embodiment of the present disclosure, the LP-SS/LP-WUS signal can be used to assist the first device in obtaining the synchronization information of the received wake-up signal without turning on the MR/periodically turning on the MR, thereby improving the accuracy of the wake-up signal reception while achieving energy saving effects. Meanwhile, the LP-SS/LP-WUS is used to assist the MR in receiving the synchronization signal, so that the terminal can quickly communicate with the base station in a long-term sleep state, thereby reducing the delay in normal communication between the MR and the base station after waking up of MR while saving energy.

The technical solution of the embodiment of the present disclosure may be applied to various systems, especially the fifth generation communication (5G) system. For example, applicable systems may be Global System of Mobile communication (GSM) system, Code Division Multiple Access (CDMA) system, Wideband Code Division Multiple Access (WCDMA) system, General Packet Radio Service (GPRS) system, Long Term Evolution (LTE) system, TD-LTE and FDD LTE, Long Term Evolution Advanced (LTE-A) system, Universal Mobile Telecommunication System (UMTS), Worldwide Interoperability for Microwave Access (WiMAX) system, or 5th-Generation (5G) New Radio (NR) system. Each of these systems includes a terminal device and a network device. Each system further includes a core network part, e.g., an Evolved Packet System (EPS) or 5G system (5GS).

Terminal devices involved in the embodiments of the present disclosure may be a device that provides voice and/or data connectivity to a user, a handheld device with a wireless connection function, or other processing device coupled to a wireless modem. In different systems, names of terminal devices may be different. For example, in the 5G system, the terminal device may be referred as user equipment (UE). A wireless terminal device may communicate with one or more core networks (CN) via a radio access network (RAN). The wireless terminal device may be a mobile terminal device such as a mobile phone (or referred as cell phone), or a computer with a mobile terminal device, such as a portable, pocket-sized, handheld, computer built-in or vehicle-mounted mobile device, which exchange language and/or data with wireless access networks, for example, a personal communication service (PCS) phone, a cordless phone, a session initiated protocol (SIP) phone, a wireless local loop (WLL) station, a personal digital assistant (PDA) and other device. The wireless terminal device may also be referred to as system, subscriber unit, subscriber station, mobile station, mobile, remote station, access point, remote terminal, access terminal, user terminal, user agent, or user device, which are not limited in the embodiments of the present disclosure.

The network device involved in the embodiments of the present disclosure may be a base station, and the base station may include a plurality of cells for providing services for the terminal. According to different specific application scenarios, the base station may also be referred as an access point, or the base station may be a device in an access network that communicates with wireless terminal devices through one or more sectors on air interfaces, or other names. The network device may be used to exchange received frames with internet protocol (IP) packets, and act as a router between the wireless terminal device and the rest of the access network, where the rest of the access network may include an internet protocol (IP) communication network. The network device may also coordinate attribute management for air interfaces. For example, the network device involved in the embodiments of the present disclosure may be a base transceiver station (BTS) in global system for mobile communications (GSM) or code division multiple access (CDMA), a NodeB in wide-band code division multiple access (WCDMA), an evolutional Node B (eNB or e-NodeB) in long term evolution (LTE) system, a 5G base station (gNB) in the 5G network architecture (next generation system), a home evolved Node B (HeNB), a relay node, a femto, or a pico, which are not limited in the embodiments of the present disclosure. In some network structures, the network device may include a centralized unit (CU) node and a distributed unit (DU) node; and the centralized unit and the distributed unit may also be geographically separated.

Each of the network device and the terminal can use one or more antennas for multi input multi output (MIMO) transmission between the network device and the terminal. The MIMO transmission may be single user MIMO (SU-MIMO), or multiple user MIMO (MU-MIMO). According to forms and numbers of antenna combinations, MIMO transmission may be two dimensional-MIMO (2D-MIMO), three dimensional-MIMO (3D-MIMO), full dimensional-MIMO (FD-MIMO), or massive-MIMO, or diversity transmission, precoding transmission, or beamforming transmission.

As shown in FIG. 6, a signal processing device of one embodiment of the present disclosure is applied to a network device, and includes: a processor 600 used to read a program in a memory 620 and execute the following process:
sending a first signal and/or a second signal to a first device, thereby enabling the first device to obtain at least one of first synchronization information and first wake-up information according to the first signal and/or the second signal, and receive a wake-up signal according to at least one of the first synchronization information and the first wake-up information;
a transceiver 610 used to receive and send data under the control of the processor 600.

In FIG. 6, a bus architecture may include any number of interconnected bus and bridge. Specifically, various circuits of one or more processors, which are represented by the processor 600, and one or more memories, which are represented by the memory 620, are linked together. The bus architecture may link various other circuits, such as a peripheral device, voltage regulator and a power management circuit together. These features are well known in this field; therefore, the present disclosure does not make further description on these features. The bus interface provides an interface. The transceiver 610 may be multiple elements, including a transmitter and a receiver and provide units, which communicate with other devices on the transmission medium. The processor 600 is responsible for managing the bus architecture and the normal processing. The memory 620 may be used to store data used by the processor 600 for performing operations.

Optionally, the processor 600 may be a central processing unit (CPU), an application specific integrated circuit (ASIC), a field-programmable gate array (FPGA) or a complex programmable logic device (CPLD). The processor may also adopt multi-core architecture.

The processor 600 is responsible for managing the bus architecture and the normal processing. The memory 620 may be used to store data used by the processor 600 for performing operations.

The processor 600 is further used to read the program and execute the following steps:
sending a third signal to the first device.

The processor 600 is further used to read the program and execute the following steps:
sending the first signal to the first device in a first period;
sending a second signal when service transmission or paging is required.

The processor 600 is further used to read the program and execute the following steps:
sending the second signal with a second period within the first sending time window; or
determining a sending resource location of the second signal according to a third signal; sending the second signal according to the sending resource location.

The first sending time window is determined according to the second receiving window, where the second receiving window is a receiving window used by the second device to obtain first-level synchronization information.

The processor 600 is further used to read the program and execute the following steps:
determining a position relationship parameter of the second signal and the third signal by one or more of the following manners;
determining a sending resource position of the second signal according to the position relationship parameter;
where the manners include:
   broadcast signal;
   pre-definition;
   high-level pre-configuration;
   downlink signal or channel.

Optionally, the first signal includes first information, and the first information is used to receive the second signal and/or the third signal; or
the second signal includes information of the third signal; or
the second signal includes the first wake-up information.

It is to be noted that the foregoing device provided in the embodiments of the present disclosure can perform all the method steps performed in the foregoing method embodiments, and can achieve the same technical effect. The parts and beneficial effects in this embodiment that are the same as those in the method embodiment will not be described in detail here.

As shown in FIG. 7, a signal processing device according to an embodiment of the present disclosure is applied to a first device, and includes:
a processor 700 used to read a program in a memory 720 and execute the following process:
in an extremely low power consumption state, receiving a first signal and/or a second signal sent by a network device;
obtaining at least one of first synchronization information and first wake-up information according to the first signal and/or the second signal;
receiving a wake-up signal according to at least one of the first synchronization information and the first wake-up information;
a transceiver 710 used to receive and send data under the control of the processor 700.

In FIG. 7, a bus architecture may include any number of interconnected bus and bridge. Specifically, various circuits of one or more processors, which are represented by the processor 700, and one or more memories, which are represented by the memory 720, are linked together. The bus architecture may link various other circuits, such as a peripheral device, voltage regulator and a power management circuit together. These features are well known in this field; therefore, the present disclosure does not make further description on these features. The bus interface provides an interface. The transceiver 710 may be multiple elements, including a transmitter and a receiver and provide units, which communicate with other devices on the transmission medium. The transmission medium includes transmission media such as wireless channels, wired channels, and optical cables. For different UEs, the bus interface 730 may be an interface that can be connected to external or internal devices. The connected devices include but are not limited to a small keyboard, a display, a speaker, a microphone, a joystick, etc.

The processor 700 is responsible for managing the bus architecture and the normal processing. The memory 720 may be used to store data used by the processor 700 for performing operations.

Optionally, the processor 700 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any of the methods provided by the embodiments of the present disclosure according to obtained executable instructions. The processor and the memory may also be arranged physically separately.

The processor 700 is further used to read the program and execute the following steps:
triggering the second device to perform signal transmission according to at least one of the first synchronization information and the first wake-up information.

The processor 700 is further used to read the program and execute the following steps:
receiving the first signal in a periodic, aperiodic or first synchronization raster manner, where the first signal includes the first synchronization information;
receiving the second signal according to the first signal, where the second signal includes the first wake-up information.

The first synchronization raster is used to determine frequency information of the first signal.

Optionally, the processor 700 is further used to read the program and execute the following steps:
in the case where the target mode includes receiving based on a first synchronization raster, obtaining parameters of the first synchronization raster; receiving the first signal according to the parameters of the first synchronization raster, where the parameters of the first synchronization raster include one or more of a starting frequency, an ending frequency, a frequency bandwidth, and a maximum number of searches; or,
determining a first target global synchronization signal number GSCN; determine the first synchronization raster according to a first correspondence relationship and the first target GSCN; receiving the first signal according to the first synchronization raster, where the first correspondence relationship is a correspondence relationship between GSCN and the synchronization raster.

Optionally, the processor 700 is further used to read the program and execute the following steps:
determining a resource location of the second signal according to a resource location of the first signal; receiving the second signal according to the resource location of the second signal, where the second signal includes the first wake-up information; or
receiving the second signal according to the first synchronization information carried by the first signal.

Optionally, the processor 700 is further used to read the program and execute the following steps:
receiving the second signal in a periodic, non-periodic or second synchronization raster manner, where the second signal includes the first synchronization information and the first wake-up information.

The second synchronization raster is used to determine the frequency information of the second signal.

Optionally, the processor 700 is further used to read the program and execute the following steps:
obtaining parameters of the second synchronization raster; receiving the second signal according to the parameters of the second synchronization raster, where the parameters of the second synchronization raster include one or more of a starting frequency, an ending frequency, a frequency bandwidth, and a maximum number of searches; or
determining a second target GSCN; determining the second synchronization raster according to a second corresponding relationship and the second target GSCN; receiving the second signal according to the second synchronization raster, where the second corresponding relationship is a corresponding relationship between GSCN and the synchronization raster.

Optionally, the processor 700 is further used to read the program and execute the following steps:
obtaining a receiving window parameter corresponding to the non-periodic mode, where the receiving window parameter includes one or more of a window period, a duration, a window start time, and an effective time of the receiving window.

Optionally, the first device is a first terminal, and the processor 700 is further used to read the program and execute the following steps:
sending first indication information to the second device, where the first indication information is used to indicate first-level synchronization information.

Optionally, the processor 700 is further used to read the program and execute the following steps:
periodically receiving the first signal and/or the second signal within a first receiving window.

Optionally, the processor 700 is further used to read the program and execute the following steps:
obtaining the first synchronization information according to the first signal and/or the second signal, where the first synchronization information includes second-level synchronization information.

Optionally, the processor 700 is further used to read the program and execute the following steps:
determining through a second receiving window;
determining by a third signal;
determining by a second receiving window and a third signal.

The second receiving window is a receiving window used by the second device to obtain first-level synchronization information, and the third signal includes a window parameter of the first receiving window or a first parameter, where the first parameter is used to determine the first receiving window.

Optionally, the processor 700 is further used to read the program and execute the following steps:
determining the first receiving window by a time offset between a start time or an end time of the second receiving window and a start time of the first receiving window;
determining the first receiving window by a time offset between a start time or an end time of the second receiving window and an end time of the first receiving window;
determining the first receiving window according to a relationship between a window parameter of the second receiving window and a window parameter of the first receiving window;
determining an effective time of the first receiving window through the second receiving window;
determining one or more receiving windows included in the second receiving window as the first receiving window; or determining a part of one second receiving window as the first receiving window.

Optionally, the processor 700 is further used to read the program and execute the following steps:
determining the first receiving window by using a window parameter of the first receiving window;
determining one or more receiving windows included in the second receiving window as the first receiving window; or determining a part of one of the second receiving windows as the first receiving window.

Optionally, the processor 700 is further used to read the program and execute the following steps:
determining the first receiving window according to a first parameter in the third signal and the second receiving window, where the first parameter includes one or more of the following:
a time offset between the start time of the first receiving window and the start time of the second receiving window, and relationship between the duration of the first receiving window and the duration of the second receiving window.

Optionally, the processor 700 is further used to read the program and execute the following steps:
receiving a second indication sent by a second device, where the second indication is used to indicate first precision synchronization information;
according to the second indication, and the first signal and/or the second signal, obtaining the first synchronization information, where the first synchronization information includes second precision synchronization information.

Optionally, the processor 700 is further used to read the program and execute the following steps:
sending a third indication to the second device, where the third indication is used to indicate the second precision synchronization information, and the second precision synchronization information is used by the second device to obtain a third signal and obtain the first precision synchronization information.

Optionally, the first device is a first terminal, and the processor 700 is further used to read the program and execute the following steps:
sending a third signal according to at least one of the first synchronization information and the first wake-up information.

Optionally, the processor 700 is further used to read the program and execute the following steps:
in the case of determining to transmit the third signal, determining a resource location of the third signal according to the first signal and/or the second signal;
sending the third signal according to the resource location of the third signal.

Optionally, the processor 700 is further used to read the program and execute the following steps:
obtaining position relationship information between the first signal and the third signal, and/or position relationship information between the second signal and the third signal; determining a resource location of the third signal according to the resource location of the first signal and the position relationship information between the first signal and the third signal, and/or the resource location of the second signal and the position relationship information between the second signal and the third signal; or
determining the resource location of the third signal according to the resource information of the first signal and/or the second signal.

Optionally, the position relationship information includes one or more of the following: time domain offset, frequency range offset, frequency offset; or

The resource location includes one or more of the following:
a time domain position of signal transmission, a frequency domain position of signal transmission.

The time domain position of the signal transmission includes one or more of transmission period, subframe position, and symbol position within the subframe; the frequency domain position of the signal transmission includes one or more of center frequency, starting carrier, and ending carrier.

Optionally, the processor 700 is further used to read the program and execute the following steps:
obtaining position relationship information between the first signal and the third signal, and/or position relationship information between the second signal and the third signal by one or more of the following manners:
broadcast signal;
pre-definition
high-level pre-configuration;
downlink signal or channel.

Optionally, the processor 700 is further used to read the program and execute the following steps:
determining whether to transmit a third signal according to the first signal and/or the second signal.

Optionally, the processor 700 is further used to read the program and execute the following steps:
in case of receiving the wake-up information and/or activation information carried by the second signal, determining to transmit the third signal; or,
in case of receiving sleep information carried by the first signal and/or the second signal, determining to not transmit the third signal.

Optionally, the second device is a second terminal, and the wake-up information and/or activation information is carried by a dedicated signal used by the second terminal to activate the first terminal.

Optionally, the third signal includes one or more of the following:
uplink data or signal or channel, downlink data or signal or channel, uplink data signal, downlink data signal, semi-persistent scheduling SPS resources, configured grant (CG) resources, uplink control signal, downlink control signal, reference signal, broadcast signal.

Optionally, the first synchronization information includes first precision synchronization information and second precision synchronization information, where accuracy of the first precision synchronization information is lower than that of the second precision synchronization information.

Optionally, the first precision synchronization information includes one or more of the following:
a reception time domain deviation of the second signal, a receiving frequency domain deviation of the second signal, a false-alarm probability of the second signal, and a receiving missed detection probability of the second signal; where the reception time domain deviation of the second signal satisfies a first threshold, the receiving frequency domain deviation of the second signal satisfies a second threshold, the false-alarm probability of the second signal satisfies a third threshold, and the receiving missed detection probability of the second signal satisfies a fourth threshold;
   and/or,
the second precision synchronization information includes one or more of the following:
   a receiving time domain deviation of the second signal, a receiving frequency domain deviation of the second signal, a false-alarm probability of the second signal, and a receiving missed detection probability of the second signal; where the receiving time domain deviation of the second signal satisfies the fifth threshold, the receiving frequency domain deviation of the second signal satisfies the sixth threshold, the false-alarm probability of the second signal satisfies the seventh threshold, and the receiving missed detection probability of the second signal satisfies the eighth threshold.

It is to be noted that the foregoing device provided in the embodiments of the present disclosure can perform all the method steps performed in the foregoing method embodiments, and can achieve the same technical effect. The parts and beneficial effects in this embodiment that are the same as those in the method embodiment will not be described in detail here.

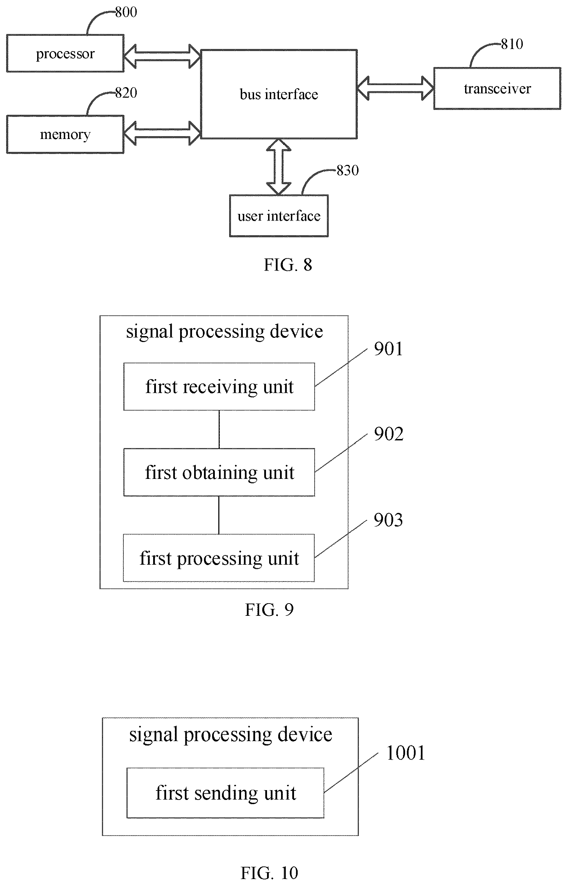

As shown in FIG. 8, a signal processing apparatus according to one embodiment of the present disclosure is applied to a second device, and includes: a processor 800 used to read a program in a memory 820 and execute the following process:
in response to a trigger of a first device, performing signal transmission according to first synchronization information and/or first wake-up information; where at least one of the first synchronization information and the first wake-up information is obtained according to a first signal and/or a second signal of a network device.
a transceiver 810 used to receive and send data under the control of the processor 800.

In FIG. 8, a bus architecture may include any number of interconnected bus and bridge. Specifically, various circuits of one or more processors, which are represented by the processor 800, and one or more memories, which are represented by the memory 820, are linked together. The bus architecture may link various other circuits, such as a peripheral device, voltage regulator and a power management circuit together. These features are well known in this field; therefore, the present disclosure does not make further description on these features. The bus interface provides an interface. The transceiver 810 may be multiple elements, including a transmitter and a receiver and provide units, which communicate with other devices on the transmission medium. For different UEs, the bus interface 830 may be an interface that can be connected to external or internal devices. The connected devices include but are not limited to a small keyboard, a display, a speaker, a microphone, a joystick, etc.

The processor 800 is responsible for managing the bus architecture and the normal processing. The memory 820 may be used to store data used by the processor 800 for performing operations.

Optionally, the processor 800 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any of the methods provided by the embodiments of the present disclosure according to obtained executable instructions. The processor and the memory may also be arranged physically separately.

The processor 800 is further used to read the program and execute the following steps:
receiving at least one of first synchronization information and first wake-up information sent by the first device; or
receiving second indication information sent by the first device, where the second indication information is used to indicate at least one of the first synchronization information and the first wake-up information.

The processor 800 is further used to read the program and execute the following steps:
sending a second indication to the first device, where the second indication is used to indicate first precision synchronization information.

The processor 800 is further used to read the program and execute the following steps:
receiving a third indication sent by the first device, where the third indication is used to indicate second precision synchronization information.

It is to be noted that the foregoing device provided in the embodiments of the present disclosure can perform all the method steps performed in the foregoing method embodiments, and can achieve the same technical effect. The parts and beneficial effects in this embodiment that are the same as those in the method embodiment will not be described in detail here.

As shown in FIG. 9, a signal processing device according to an embodiment of the present disclosure is applied to a first device and includes:
a first receiving unit 901 used to, in an extremely low power consumption state, receiving a first signal and/or a second signal sent by a network device; a first obtaining unit 902 used to obtain at least one of first synchronization information and first wake-up information according to the first signal and/or the second signal; a first processing unit 903 used to receive a wake-up signal according to at least one of the first synchronization information and the first wake-up information.

Optionally, the device may further include:
a triggering unit used to trigger the second device to perform signal transmission according to at least one of the first synchronization information and the first wake-up information.

Optionally, the first receiving unit includes:
a first receiving subunit used to receive the first signal in a periodic, aperiodic or first synchronization raster manner, where the first signal includes the first synchronization information;
a second receiving subunit used to receive the second signal according to the first signal, where the second signal includes the first wake-up information.

The first synchronization raster is used to determine frequency information of the first signal.

Optionally, in the case where the target mode includes receiving based on a first synchronization raster, the first receiving subunit is used to:
obtain parameters of the first synchronization raster; receive the first signal according to the parameters of the first synchronization raster, where the parameters of the first synchronization raster include one or more of a starting frequency, an ending frequency, a frequency bandwidth, and a maximum number of searches; or,
determine a first target global synchronization signal number GSCN; determine the first synchronization raster according to a first correspondence relationship and the first target GSCN; receive the first signal according to the first synchronization raster, where the first correspondence relationship is a correspondence relationship between GSCN and the synchronization raster.

Optionally, the second receiving subunit is used to:
determine a resource location of the second signal according to a resource location of the first signal; receive the second signal according to the resource location of the second signal, where the second signal includes the first wake-up information; or
receive the second signal according to the first synchronization information carried by the first signal.

Optionally, the first receiving unit is further used to:
receive the second signal in a periodic, non-periodic or second synchronization raster manner, where the second signal includes the first synchronization information and the first wake-up information.

The second synchronization raster is used to determine the frequency information of the second signal.

Optionally, the first receiving unit is further used to:
obtain parameters of the second synchronization raster; receive the second signal according to the parameters of the second synchronization raster, where the parameters of the second synchronization raster include one or more of a starting frequency, an ending frequency, a frequency bandwidth, and a maximum number of searches; or
determine a second target GSCN; determinie the second synchronization raster according to a second corresponding relationship and the second target GSCN; receive the second signal according to the second synchronization raster, where the second corresponding relationship is a corresponding relationship between GSCN and the synchronization raster.

Optionally, the device further includes:
a second obtaining unit used to obtain a receiving window parameter corresponding to the non-periodic mode, where the receiving window parameter includes one or more of a window period, a duration, a window start time, and an effective time of the receiving window.

Optionally, the first device is a first terminal, and the first synchronization information includes first-level synchronization information; the device further includes:
a first sending unit used to send first indication information to the second device, where the first indication information is used to indicate the first level synchronization information.

Optionally, the first receiving unit is further used to:
periodically receive the first signal and/or the second signal within a first receiving window.

Optionally, the first obtaining unit is further used to:
obtain the first synchronization information according to the first signal and/or the second signal, where the first synchronization information includes second-level synchronization information.

Optionally, the first receiving window is determined by one or more of the following manners:
determining through a second receiving window;
determining by a third signal;
determining by a second receiving window and a third signal.

The second receiving window is a receiving window used by the second device to obtain first-level synchronization information, and the third signal includes a window parameter of the first receiving window or a first parameter, where the first parameter is used to determine the first receiving window.

Optionally, determining the first receiving window by using the second receiving window includes one or more of the following manners:
determining the first receiving window by a time offset between a start time or an end time of the second receiving window and a start time of the first receiving window;
determining the first receiving window by a time offset between a start time or an end time of the second receiving window and an end time of the first receiving window;
determining the first receiving window according to a relationship between a window parameter of the second receiving window and a window parameter of the first receiving window;
determining an effective time of the first receiving window through the second receiving window;
determining one or more receiving windows included in the second receiving window as the first receiving window; or determining a part of one second receiving window as the first receiving window.

Optionally, determining the first receiving window by using the third signal includes one or more of the following manners:
determining the first receiving window by using a window parameter of the first receiving window;
determining one or more receiving windows included in the second receiving window as the first receiving window; or determining a part of one of the second receiving windows as the first receiving window.

Optionally, determining the first receiving window by using the second receiving window and the third signal includes:
determining the first receiving window according to a first parameter in the third signal and the second receiving window, where the first parameter includes one or more of the following:
a time offset between the start time of the first receiving window and the start time of the second receiving window, and relationship between the duration of the first receiving window and the duration of the second receiving window.

Optionally, the first obtaining unit is further used to:
receive a second indication sent by a second device, where the second indication is used to indicate first precision synchronization information;
according to the second indication, and the first signal and/or the second signal, obtain the first synchronization information, where the first synchronization information includes second precision synchronization information.

Optionally, the device further includes:
a second sending unit used to send a third indication to the second device, where the third indication is used to indicate the second precision synchronization information, and the second precision synchronization information is used by the second device to obtain a third signal and obtain the first precision synchronization information.

Optionally, the first device is a first terminal, and the device may further include:
a first transmission unit used to send a third signal according to at least one of the first synchronization information and the first wake-up information.

Optionally, the first transmission unit includes:
a determining subunit used to, in the case of determining to transmit the third signal, determine a resource location of the third signal according to the first signal and/or the second signal;
a transmission subunit used to send the third signal according to the resource location of the third signal.

Optionally, the determining subunit is further used to:
obtain position relationship information between the first signal and the third signal, and/or position relationship information between the second signal and the third signal; determine a resource location of the third signal according to the resource location of the first signal and the position relationship information between the first signal and the third signal, and/or the resource location of the second signal and the position relationship information between the second signal and the third signal; or
determine the resource location of the third signal according to the resource information of the first signal and/or the second signal.

Optionally, the position relationship information includes one or more of the following: time domain offset, frequency range offset, frequency offset; or

The resource location includes one or more of the following:
a time domain position of signal transmission, a frequency domain position of signal transmission.

The time domain position of the signal transmission includes one or more of transmission period, subframe position, and symbol position within the subframe; the frequency domain position of the signal transmission includes one or more of center frequency, starting carrier, and ending carrier.

Optionally, the position relationship information between the first signal and the third signal, and/or the position relationship information between the second signal and the third signal is obtained by one or more of the following manners:
broadcast signal;
pre-definition
high-level pre-configuration;
downlink signal or channel.

Optionally, the device may further include:
a determining unit used to determine whether to transmit a third signal according to the first signal and/or the second signal.

Optionally, the determining unit is further used to:
in case of receiving the wake-up information and/or activation information carried by the second signal, determine to transmit the third signal; or,
in case of receiving sleep information carried by the first signal and/or the second signal, determine to transmit the third signal.

Optionally, the second device is a second terminal, and the wake-up information and/or activation information is carried by a dedicated signal used by the second terminal to activate the first terminal.

Optionally, the third signal includes one or more of the following:
uplink data or signal or channel, downlink data or signal or channel, uplink data signal, downlink data signal, semi-persistent scheduling SPS resources, configured grant (CG) resources, uplink control signal, downlink control signal, reference signal, broadcast signal.

Optionally, the first synchronization information includes first precision synchronization information and second precision synchronization information, where accuracy of the first precision synchronization information is lower than that of the second precision synchronization information.

Optionally, the first precision synchronization information includes one or more of the following:
a reception time domain deviation of the second signal, a receiving frequency domain deviation of the second signal, a false-alarm probability of the second signal, and a receiving missed detection probability of the second signal; where the reception time domain deviation of the second signal satisfies a first threshold, the receiving frequency domain deviation of the second signal satisfies a second threshold, the false-alarm probability of the second signal satisfies a third threshold, and the receiving missed detection probability of the second signal satisfies a fourth threshold;
   and/or,
the second precision synchronization information includes one or more of the following:
   a receiving time domain deviation of the second signal, a receiving frequency domain deviation of the second signal, a false-alarm probability of the second signal, and a receiving missed detection probability of the second signal; where the receiving time domain deviation of the second signal satisfies the fifth threshold, the receiving frequency domain deviation of the second signal satisfies the sixth threshold, the false-alarm probability of the second signal satisfies the seventh threshold, and the receiving missed detection probability of the second signal satisfies the eighth threshold.

It is to be noted that the foregoing device provided in the embodiments of the present disclosure can perform all the method steps performed in the foregoing method embodiments, and can achieve the same technical effect. The parts and beneficial effects in this embodiment that are the same as those in the method embodiment will not be described in detail here.

As shown in FIG. 10, a signal processing device of an embodiment of the present disclosure is applied to a network device, and includes:
a first sending unit 1001 used to send a first signal and/or a second signal to a first device, enabling the first device to obtain at least one of first synchronization information and first wake-up information according to the first signal and/or the second signal, and receive a wake-up signal according to at least one of the first synchronization information and the first wake-up information.

The first synchronization information is used by the first device to receive a wake-up signal, and at least one of the first synchronization information and the first wake-up information is used by the second device to perform signal transmission.

Optionally, the device may further include:
a second sending unit used to send a third signal to the first device.

Optionally, the first sending unit is further used to:
send the first signal to the first device in a first period;
send a second signal when service transmission or paging is required.

Optionally, the first sending unit is further used to:
send the second signal with a second period within the first sending time window; or
determine a sending resource location of the second signal according to a third signal; sending the second signal according to the sending resource location.

The first sending time window is determined according to the second receiving window, where the second receiving window is a receiving window used by the second device to obtain first-level synchronization information.

Optionally, the first sending unit is further used to:
determine a position relationship parameter of the second signal and the third signal by one or more of the following manners;
determine a sending resource position of the second signal according to the position relationship parameter;
where the manners include:
   broadcast signal;
   pre-definition;
   high-level pre-configuration;
   downlink signal or channel.

Optionally, the first signal includes first information, and the first information is used to receive the second signal and/or the third signal; or
the second signal includes information of the third signal; or
the second signal includes the first wake-up information.

It is to be noted that the foregoing device provided in the embodiments of the present disclosure can perform all the method steps performed in the foregoing method embodiments, and can achieve the same technical effect. The parts and beneficial effects in this embodiment that are the same as those in the method embodiment will not be described in detail here.

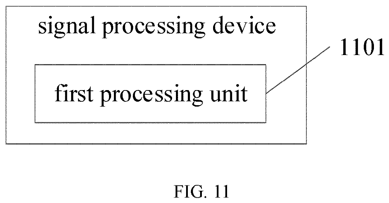

As shown in FIG. 11, a signal processing device of an embodiment of the present disclosure is applied to a second device and includes:
a first processing unit 1101 used to, in response to a trigger of a first device, perform signal transmission according to first synchronization information and/or first wake-up information;
where at least one of the first synchronization information and the first wake-up information is obtained according to a first signal and/or a second signal of a network device.

Optionally, the device may further include:
a first receiving unit used to receive at least one of first synchronization information and first wake-up information sent by the first device; or
a second receiving unit used to receive second indication information sent by the first device, where the second indication information is used to indicate at least one of the first synchronization information and the first wake-up information.

Optionally, the device may further include:
a first sending unit used to send a second indication to the first device, where the second indication is used to indicate first precision synchronization information.

Optionally, the device may further include:
a third receiving unit used to receive a third indication sent by the first device, where the third indication is used to indicate second precision synchronization information.

It is to be noted that the foregoing device provided in the embodiments of the present disclosure can perform all the method steps performed in the foregoing method embodiments, and can achieve the same technical effect. The parts and beneficial effects in this embodiment that are the same as those in the method embodiment will not be described in detail here.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

One embodiment of the present disclosure further provides a communication device, including: a memory, a processor, and a program stored in the memory and executable on the processor. The processor executes the program to implement the steps of the above signal processing method.

One embodiment of the present disclosure further provides a processor-readable storage medium, which includes program instructions stored thereon. The computer program is used to cause a processor to perform various processes of the above signal processing method embodiments and achieves the same technical effects, which are not repeated here to avoid repetition. The processor-readable storage medium may be any available medium or data storage device that the processor may access, including but not limited to a magnetic memory (such as a floppy disk, a hard disk, a magnetic tape, a magneto-optical disk (MO), etc.), an optical memory (such as a compact disk (CD), a digital versatile disc (DVD), a Blu-ray disc (BD), a high-definition versatile disc (HVD), etc.), or a semiconductor memory (such as a ROM, an erasable programmable read-only memory (EPROM), an electrically erasable programmable read-only memory (EEPROM), a non-volatile memory (NAND FLASH), a solid state disk or solid state driver (SSD)).

It is to be noted that terms such as "including" and "having" and any variations thereof are intended to cover non-exclusive inclusion, so that a process, method, product or device including a series of elements is not limited to the elements that are clearly listed and may include other elements that are not clearly listed or are inherent to the process, method, product, or device. Without further limitation, an element defined by the phrase "including one..." does not exclude the presence of additional identical elements in the process, method, article, or device that includes that element.

Through the description of the above embodiments, those skilled in the art can clearly understand that the method of the above embodiments can be implemented through software plus a necessary general-purpose hardware platform, and of course can also be implemented via hardware. However, in many cases, the former is a better implementation manner. Based on such understanding, the technical solution of the present disclosure, in essence, or the part that contributes to the related technologies may be embodied in the form of a software product. This computer software product is stored in a storage medium (such as ROM/RAM, a disk, an optical disc) and includes a plurality of instructions for causing a terminal device (which may be a mobile phone, a computer, a server, an air conditioner, or a network device, etc.) to execute the methods described in the various embodiments of the present disclosure.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, a certain module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits used to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present application are used to distinguish similar objects and are not necessarily used to describe a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

Obviously, those skilled in the art can make various changes and modifications to the present application without departing from the spirit and scope of the present application. Thus, if these modifications and variations of the present application fall within the scope of the claims of the present application and equivalent technologies thereof, the present application also intends to include these modifications and variations.

## Claims

1. A signal processing method, applied to a first device, comprising:
in an extremely low power consumption state, receiving a first signal and/or a second signal sent by a network device;
obtaining at least one of first synchronization information and first wake-up information according to the first signal and/or the second signal; and
receiving a wake-up signal according to the at least one of the first synchronization information and the first wake-up information.

2. The method according to claim 1, further comprising:
triggering a second device to perform signal transmission according to the at least one of the first synchronization information and the first wake-up information.

3. The method according to claim 1, wherein the first signal includes low power synchronizing signal (LP-SS); and/or,
the second signal includes a low power wake-up signal (LP-WUS).

4. The method according to claim 1, wherein the receiving a first signal and/or a second signal sent by a network device, includes:
receiving the first signal in a periodic, aperiodic or first synchronization raster manner, wherein the first signal includes the first synchronization information;
receiving the second signal according to the first signal, wherein the second signal includes the first wake-up information;
wherein the first synchronization raster is used to determine frequency information of the first signal.

5. The method according to claim 4, wherein the receiving the first signal in a first synchronization raster manner, includes:
obtaining a parameter of the first synchronization raster; receiving the first signal according to the parameter of the first synchronization raster, wherein the parameter of the first synchronization raster includes one or more of a starting frequency, an ending frequency, a frequency bandwidth, and a maximum number of searches; or,
determining a first target global synchronization signal number (GSCN); determining the first synchronization raster according to a first correspondence relationship and the first target GSCN; receiving the first signal according to the first synchronization raster; wherein the first correspondence relationship is a correspondence relationship between GSCN and the synchronization raster.

6. The method according to claim 4, wherein the receiving the second signal according to the first signal, includes:
determining a resource location of the second signal according to a resource location of the first signal; receiving the second signal according to the resource location of the second signal, wherein the second signal includes the first wake-up information; or
receiving the second signal according to first synchronization information carried by the first signal.

7. The method according to claim 1, wherein the receiving a second signal sent by a network device, includes:
receiving the second signal in a periodic, non-periodic or second synchronization raster manner; wherein the second signal includes the first synchronization information and the first wake-up information;
wherein the second synchronization raster is used to determine frequency information of the second signal.

8. The method according to claim 7, wherein the receiving the second signal in a second synchronization raster manner, includes:
obtaining a parameter of the second synchronization raster; receiving the second signal according to the parameter of the second synchronization raster; wherein the parameter of the second synchronization raster includes one or more of a starting frequency, an ending frequency, a frequency bandwidth, and a maximum number of searches; or
determining a second target GSCN; determining the second synchronization raster according to a second corresponding relationship and the second target GSCN; receiving the second signal according to the second synchronization raster; wherein the second corresponding relationship is a corresponding relationship between GSCN and the synchronization raster.

9. The method according to claim 4 or 7, further comprising:
obtaining a receiving window parameter corresponding to the non-periodic mode, wherein the receiving window parameter includes one or more of a window period, a duration, a window start time, and an effective time of the receiving window.

10. The method according to claim 7, wherein the first synchronization information includes first-level synchronization information, and the method further includes:
sending first indication information to the second device, wherein the first indication information is used to indicate the first-level synchronization information.

11. The method according to claim 1, wherein the receiving a first signal and/or a second signal sent by a network device, includes:
periodically receiving the first signal and/or the second signal within a first receiving window.

12. The method according to claim 11, wherein the obtaining at least one of first synchronization information and first wake-up information according to the first signal and/or the second signal, includes:
obtaining the first synchronization information according to the first signal and/or the second signal, wherein the first synchronization information includes second-level synchronization information.

13. The method according to claim 11, wherein the first receiving window is determined by one or more of the following manners:
determining through a second receiving window;
determining by a third signal;
determining by a second receiving window and a third signal;
wherein the second receiving window is a receiving window used by the second device to obtain first-level synchronization information, and the third signal includes a window parameter of the first receiving window or a first parameter, wherein the first parameter is used to determine the first receiving window.

14. The method according to claim 13, wherein the first receiving window is determined through the second receiving window in a way including one or more of the following:
determining the first receiving window by a time offset between a start time or an end time of the second receiving window and a start time of the first receiving window;
determining the first receiving window by a time offset between a start time or an end time of the second receiving window and an end time of the first receiving window;
determining the first receiving window according to a relationship between a window parameter of the second receiving window and the window parameter of the first receiving window;
determining an effective time of the first receiving window through the second receiving window;
determining one or more receiving windows included in the second receiving window as the first receiving window; or determining a part of one second receiving window as the first receiving window.

15. The method according to claim 13, wherein the first receiving window is determined through the third signal in a way including one or more of the following:
determining the first receiving window by using the window parameter of the first receiving window;
determining one or more receiving windows included in the second receiving window as the first receiving window; or determining a part of one second receiving window as the first receiving window.

16. The method according to claim 13, wherein the first receiving window is determined through the second receiving window and the third signal in a way including:
determining the first receiving window according to a first parameter in the third signal and the second receiving window, wherein the first parameter includes one or more of the following:
a time offset between a start time of the first receiving window and a start time of the second receiving window, and
relationship between a duration of the first receiving window and a duration of the second receiving window.

17. The method according to claim 11, wherein the obtaining at least one of first synchronization information and first wake-up information according to the first signal and/or the second signal, includes:
receiving a second indication sent by the second device, wherein the second indication is used to indicate first precision synchronization information;
according to the second indication, and the first signal and/or the second signal, obtaining the first synchronization information, wherein the first synchronization information includes second precision synchronization information.

18. The method according to claim 17, wherein the method further includes:
sending a third indication to the second device, wherein the third indication is used to indicate the second precision synchronization information.

19. The method according to claim 1, wherein the method further includes:
sending a third signal according to at least one of the first synchronization information and the first wake-up information.

20. The method according to claim 19, wherein the sending a third signal according to at least one of the first synchronization information and the first wake-up information, includes:
in case of determining to transmit the third signal, determining a resource location of the third signal according to the first signal and/or the second signal;
sending the third signal according to the resource location of the third signal.

21. The method according to claim 20, wherein the determining a resource location of the third signal according to the first signal and/or the second signal, includes:
obtaining position relationship information between the first signal and the third signal, and/or position relationship information between the second signal and the third signal; determining the resource location of the third signal according to the resource location of the first signal and the position relationship information between the first signal and the third signal, and/or the resource location of the second signal and the position relationship information between the second signal and the third signal; or
determining the resource location of the third signal according to the resource information of the first signal and/or the second signal.

22. The method according to claim 21, wherein the position relationship information includes one or more of the following: time domain offset, frequency range offset, frequency offset; or
the resource location includes one or more of the following: a time domain position of signal transmission, a frequency domain position of signal transmission;
wherein the time domain position of the signal transmission includes one or more of transmission period, subframe position, and symbol position within the subframe; the frequency domain position of the signal transmission includes one or more of center frequency, starting carrier, and ending carrier.

23. The method according to claim 21, wherein the position relationship information between the first signal and the third signal, and/or position relationship information between the second signal and the third signal, is obtained in one or more of the following manners:
broadcast signal;
pre-definition
high-level pre-configuration;
downlink signal or channel.

24. The method according to claim 1, wherein the method further includes:
determining whether to transmit a third signal according to the first signal and/or the second signal.

25. The method according to claim 24, wherein the determining whether to transmit a third signal according to the first signal and/or the second signal, includes:
in case of receiving wake-up information and/or activation information carried by the second signal, determining to transmit the third signal; or,
in case of receiving sleep information carried by the first signal and/or the second signal, determining to not transmit the third signal.

26. The method according to claim 25, wherein the wake-up information and/or activation information is carried by a dedicated signal for activating the first terminal.

27. The method according to any one of claims 13 to 16 and 18 to 26, wherein the third signal includes one or more of the following:
uplink data or signal or channel, downlink data or signal or channel, uplink data signal, downlink data signal, semi-persistent scheduling SPS resources, configured grant (CG) resources, uplink control signal, downlink control signal, reference signal, broadcast signal.

28. The method according to claim 1, wherein the first synchronization information includes first precision synchronization information and second precision synchronization information, wherein accuracy of the first precision synchronization information is lower than that of the second precision synchronization information.

29. The method according to claim 28, wherein the first precision synchronization information includes one or more of the following:
a reception time domain deviation of the second signal, a receiving frequency domain deviation of the second signal, a false-alarm probability of the second signal, and a receiving missed detection probability of the second signal; wherein the reception time domain deviation of the second signal satisfies a first threshold, the receiving frequency domain deviation of the second signal satisfies a second threshold, the false-alarm probability of the second signal satisfies a third threshold, and the receiving missed detection probability of the second signal satisfies a fourth threshold;
and/or,
the second precision synchronization information includes one or more of the following:
a receiving time domain deviation of the second signal, a receiving frequency domain deviation of the second signal, a false-alarm probability of the second signal, and a receiving missed detection probability of the second signal; wherein the receiving time domain deviation of the second signal satisfies a fifth threshold, the receiving frequency domain deviation of the second signal satisfies a sixth threshold, the false-alarm probability of the second signal satisfies a seventh threshold, and the receiving missed detection probability of the second signal satisfies an eighth threshold.

30. A signal processing method, applied to a second device, comprising:
in response to a trigger of a first device, performing signal transmission according to first synchronization information and/or first wake-up information;
wherein at least one of the first synchronization information and the first wake-up information is obtained according to a first signal and/or a second signal of a network device.

31. The method according to claim 30, wherein the method further includes:
receiving at least one of first synchronization information and first wake-up information sent by the first device; or
receiving second indication information sent by the first device, wherein the second indication information is used to indicate at least one of the first synchronization information and the first wake-up information.

32. The method according to claim 30, wherein the method further includes:
sending a second indication to the first device, wherein the second indication is used to indicate first precision synchronization information.

33. The method according to claim 32, wherein the method further includes:
receiving a third indication sent by the first device, wherein the third indication is used to indicate second precision synchronization information.

34. A signal processing method, applied to a network device, comprising:
sending a first signal and/or a second signal to a first device, thereby enabling the first device to obtain at least one of first synchronization information and first wake-up information according to the first signal and/or the second signal, and receive a wake-up signal according to at least one of the first synchronization information and the first wake-up information.

35. The method according to claim 34, wherein the method further includes:
sending a third signal to the first device.

36. The method according to claim 34, wherein the sending a first signal and/or a second signal to a first device, includes:
sending the first signal to the first device in a first period;
sending a second signal when service transmission or paging is required.

37. The method according to claim 36, wherein the sending a second signal, includes:
sending the second signal with a second period within a first sending time window; or
determining a sending resource location of the second signal according to a third signal; sending the second signal according to the sending resource location;
wherein the first sending time window is determined according to a second receiving window, wherein the second receiving window is a receiving window used by the second device to obtain first-level synchronization information.

38. The method according to claim 37, wherein the determining a sending resource location of the second signal according to a third signal, includes:
determining a position relationship parameter of the second signal and the third signal by one or more of the following manners;
determining a sending resource position of the second signal according to the position relationship parameter;
wherein the manners include:
broadcast signal;
pre-definition;
high-level pre-configuration;
downlink signal or channel.

39. The method according to claim 35, wherein the first signal includes first information, and the first information is used to receive the second signal and/or the third signal; or
the second signal includes information of the third signal; or
the second signal includes the first wake-up information.

40. A signal processing device, applied to a first device, comprising:
a first receiving unit used to, in an extremely low power consumption state, receive a first signal and/or a second signal sent by a network device;
a first obtaining unit used to obtain at least one of first synchronization information and first wake-up information according to the first signal and/or the second signal;
a first processing unit used to receive a wake-up signal according to at least one of the first synchronization information and the first wake-up information.

41. The device according to claim 40, further comprising:
a triggering unit used to trigger a second device to perform signal transmission according to at least one of the first synchronization information and the first wake-up information.

42. The device according to claim 40, wherein the first signal includes low power synchronizing signal (LP-SS); and/or,
the second signal includes a low power wake-up signal (LP-WUS).

43. The device according to claim 40, wherein the first receiving unit includes:
a first receiving subunit used to receive the first signal in a periodic, aperiodic or first synchronization raster manner, wherein the first signal includes the first synchronization information;
a second receiving subunit used to receive the second signal according to the first signal, wherein the second signal includes the first wake-up information;
wherein the first synchronization raster is used to determine frequency information of the first signal.

44. The device according to claim 43, wherein when a target mode includes receiving based on a first synchronization raster, the first receiving subunit is used to:
obtain a parameter of the first synchronization raster; receive the first signal according to the parameter of the first synchronization raster, wherein the parameter of the first synchronization raster includes one or more of a starting frequency, an ending frequency, a frequency bandwidth, and a maximum number of searches; or,
determine a first target global synchronization signal number (GSCN); determine the first synchronization raster according to a first correspondence relationship and the first target GSCN; receive the first signal according to the first synchronization raster; wherein the first correspondence relationship is a correspondence relationship between GSCN and the synchronization raster.

45. The device according to claim 43, wherein the second receiving subunit is used to:
determine a resource location of the second signal according to a resource location of the first signal; receive the second signal according to the resource location of the second signal, wherein the second signal includes the first wake-up information; or
receive the second signal according to first synchronization information carried by the first signal.

46. The device according to claim 40, wherein the first receiving unit is further used to:
receive the second signal in a periodic, non-periodic or second synchronization raster manner; wherein the second signal includes the first synchronization information and the first wake-up information;
wherein the second synchronization raster is used to determine frequency information of the second signal.

47. The device according to claim 46, wherein the first receiving unit is further used to:
obtain a parameter of the second synchronization raster; receive the second signal according to the parameter of the second synchronization raster; wherein the parameter of the second synchronization raster includes one or more of a starting frequency, an ending frequency, a frequency bandwidth, and a maximum number of searches; or
determine a second target GSCN; determine the second synchronization raster according to a second corresponding relationship and the second target GSCN; receive the second signal according to the second synchronization raster; wherein the second corresponding relationship is a corresponding relationship between GSCN and the synchronization raster.

48. The device according to claim 43 or 46, wherein the device further includes:
a second obtaining unit used to obtain a receiving window parameter corresponding to the non-periodic mode, wherein the receiving window parameter includes one or more of a window period, a duration, a window start time, and an effective time of the receiving window.

49. The device according to claim 46, wherein the first device is a first terminal, and the first synchronization information includes first-level synchronization information; the device further includes:
a first sending unit used to send first indication information to the second device, wherein the first indication information is used to indicate the first-level synchronization information.

50. A signal processing device, applied to a second device, comprising:
a first processing unit used to, in response to a trigger of a first device, perform signal transmission according to first synchronization information and/or first wake-up information;
wherein at least one of the first synchronization information and the first wake-up information is obtained according to a first signal and/or a second signal of a network device.

51. The device according to claim 50, wherein the device further includes:
a first receiving unit used to receive at least one of first synchronization information and first wake-up information sent by the first device; or
a second receiving unit used to receive second indication information sent by the first device, wherein the second indication information is used to indicate at least one of the first synchronization information and the first wake-up information.

52. A signal processing device, applied to a network device, comprising:
a first sending unit used to send a first signal and/or a second signal to a first device, thereby enabling the first device to obtain at least one of first synchronization information and first wake-up information according to the first signal and/or the second signal, and receive a wake-up signal according to at least one of the first synchronization information and the first wake-up information.

53. The device according to claim 52, wherein the device further includes:
a second sending unit used to send a third signal to the first device.

54. The device according to claim 52, wherein the first sending unit is further used to:
send the first signal to the first device in a first period;
send a second signal when service transmission or paging is required.

55. The device according to claim 54, wherein the first sending unit is further used to:
send the second signal with a second period within a first sending time window; or
determine a sending resource location of the second signal according to a third signal; send the second signal according to the sending resource location;
wherein the first sending time window is determined according to a second receiving window, wherein the second receiving window is a receiving window used by the second device to obtain first-level synchronization information.

56. A signal processing device, applied to a first device, comprising: a memory, a transceiver, and a processor;
wherein the memory is used to store a computer program; the transceiver is used to send and receive data under the control of the processor; and the processor is used to read the computer program in the memory and perform the following operations:
in an extremely low power consumption state, receiving a first signal and/or a second signal sent by a network device;
obtaining at least one of first synchronization information and first wake-up information according to the first signal and/or the second signal;
receiving a wake-up signal according to at least one of the first synchronization information and the first wake-up information.

57. A signal processing device, applied to a second device, comprising: a memory, a transceiver, and a processor;
wherein the memory is used to store a computer program; the transceiver is used to send and receive data under the control of the processor; and the processor is used to read the computer program in the memory and perform the following operations:
in response to a trigger of a first device, performing signal transmission according to first synchronization information and/or first wake-up information;
wherein at least one of the first synchronization information and the first wake-up information is obtained according to a first signal and/or a second signal of a network device.

58. A signal processing device, applied to network device, comprising: a memory, a transceiver, and a processor;
wherein the memory is used to store a computer program; the transceiver is used to send and receive data under the control of the processor; and the processor is used to read the computer program in the memory and perform the following operations:
sending a first signal and/or a second signal to a first device, thereby enabling the first device to obtain at least one of first synchronization information and first wake-up information according to the first signal and/or the second signal, and receive a wake-up signal according to at least one of the first synchronization information and the first wake-up information.

59. A processor-readable storage medium, comprising a computer program stored thereon; wherein the computer program is used to cause a processor to execute the method according to any one of claims 1 to 39.
